# EUROPEAN PATENT SPECIFICATION

(11) **EP 3 094 124 B1**
(45) Date of publication and mention of the grant of the patent: **03.04.2019**
(21) Application number: 14881019.5
(22) Date of filing: 29.01.2014
(51) Int. Cl.: H04W 16/14

(54) **DATA PROCESSING METHOD AND DEVICE**
DATENVERARBEITUNGSVERFAHREN UND -VORRICHTUNG
PROCÉDÉ ET DISPOSITIF DE TRAITEMENT DE DONNÉES

(43) Date of publication of application: 16.11.2016
(73) Proprietor: Huawei Technologies Co., Ltd., Longgang District Shenzhen, Guangdong 518129 (CN)
(72) Inventor: ZENG, Qinghai, Shenzhen Guangdong 518129 (CN); ZHANG, Jian, Shenzhen Guangdong 518129 (CN); DAI, Mingzeng, Shenzhen Guangdong 518129 (CN)
(74) Representative: Körber, Martin Hans
(86) International application number: PCT/CN2014/071764
(87) International publication number: WO 2015/113252

(56) References cited:
- WO-A1-2012/106843
- WO-A1-2013/167557
- CN-A- 101 273 581
- CN-A- 102 342 063
- CN-A- 102 917 456
- CN-A- 103 313 253
- US-A1- 2013 203 429

## Description

### TECHNICAL FIELD

The present invention relates to the communications technologies, and in particular, to a data processing method and apparatus.

### BACKGROUND

Currently, resources of unlicensed carriers are more than resources of licensed carriers, and the unlicensed carriers mainly include a frequency band used for devices in industrial, scientific, and medical (Industrial, Scientific and Medical, ISM for short) and the like, that is, an ISM band. Main technologies used in the ISM band are technologies such as Wireless Fidelity (Wireless Fidelity, Wi-Fi for short) or referred to as a wireless local area network (Wireless Local Network, WLAN for short), Bluetooth, and Zigbee.

In addition, in the prior art, an unlicensed carrier may be shared by many users, that is, multiple users may use the unlicensed carrier and send information in environments such as Long Term Evolution (Long Term Evolution, LTE for short), Wi-Fi, Bluetooth, and Zigbee by using their user equipment (User Equipment, UE for short). However, because multiple users may contend for use of a same unlicensed carrier, and even if a user detects, by using user equipment, that the unlicensed carrier is occupied by a system or user equipment that belongs to another user, contention-based sending still exists, which causes signal interference on a system or another user on the unlicensed carrier, and causes a problem that efficiency of scheduling between multiple users is reduced.

WO 2012/106843 A1 discloses solutions for a controlled transmission signal deferring utilizing both licensed and unlicensed frequency bands for carrier aggregation.

### SUMMARY

The invention is defined in the independent claims. Advantageous embodiments are set out in the dependent claims.

Embodiments of the present invention provide a data processing method and apparatus, which resolves prior-art problems of signal interference and low efficiency of scheduling between multiple users that are caused because multiple devices and systems cannot coexist properly on an acquired unlicensed carrier.

A first aspect of the embodiments of the present invention provides a data processing method in a user equipment UE, including: receiving, by the user equipment UE, an uplink transmission grant sent by a base station, where the uplink transmission grant is used to schedule the UE to perform uplink data transmission at a specified location of an unlicensed carrier;
detecting, by the UE, after the reception of the uplink transmission grant and before performing the uplink data transmission whether another system or device is using the unlicensed carrier at the specified location; and
if the UE detects that another system or device is using the unlicensed carrier at the specified location, transmitting uplink data or stopping the uplink data transmission at the specified location of the unlicensed carrier according to an acquired avoidance rule.

With reference to the first aspect, in a first possible implementation manner of the first aspect, a manner of acquiring the avoidance rule is:
receiving the avoidance rule sent by the base station, where the avoidance rule is an avoidance rule for performing uplink transmission on the unlicensed carrier by the UE; or
   stipulating the avoidance rule according to a communications protocol, where the avoidance rule is an avoidance rule for performing uplink transmission on the unlicensed carrier by the UE, wherein the avoidance rule includes:
at least one of a type of a transmission system that preferentially uses the unlicensed carrier, an identifier of a transmission device that preferentially uses the unlicensed carrier, an identifier of a transmission user that preferentially uses the unlicensed carrier, or the avoidance threshold for using the unlicensed carrier by the UE.

With reference to the first possible implementation manner of the first aspect, in a second possible implementation manner of the first aspect, before the receiving, by user equipment UE, an uplink transmission grant sent by a base station, the method further includes:
sending a report message to the base station, where the report message carries capability information of the UE, so that the base station allocates the unlicensed carrier to the UE and sends the uplink transmission grant to the UE when the base station determines, according to the capability information of the UE, that the UE has a capability of supporting the unlicensed carrier, to schedule the UE to perform the uplink data transmission at the specified location of the unlicensed carrier; where
the capability information of the UE includes at least one of a frequency band supported by the UE, bandwidth supported by the UE, or whether the UE supports dynamic frequency selection.

With reference to the second possible implementation manner of the first aspect, in a third possible implementation manner of the first aspect, the transmitting uplink data or stopping the uplink data transmission at the specified location of the unlicensed carrier according to an acquired avoidance rule specifically includes:
when the avoidance rule includes an avoidance threshold for using the unlicensed carrier by the UE, comparing the avoidance threshold with a strength of an interference signal of the unlicensed carrier; and
if the strength of the interference signal of the unlicensed carrier is less than the avoidance threshold, transmitting the uplink data at the specified location of the unlicensed carrier; or
if the strength of the interference signal of the unlicensed carrier is greater than or equal to the avoidance threshold, and another avoidance rule except the avoidance threshold for using the unlicensed carrier by the UE is acquired, transmitting the uplink data or stopping the uplink data transmission at the specified location of the unlicensed carrier according to the another avoidance rule; or
if the strength of the interference signal of the unlicensed carrier is greater than or equal to the avoidance threshold, and another avoidance rule except the avoidance threshold for using the unlicensed carrier by the UE is not acquired, stopping the uplink data transmission at the specified location of the unlicensed carrier.

With reference to the first aspect or the third possible implementation manner of the first aspect, in a fourth possible implementation manner of the first aspect, the transmitting the uplink data or stopping the uplink data transmission at the specified location of the unlicensed carrier according to an acquired avoidance rule or the another avoidance rule specifically includes:
comparing, according to the avoidance rule or the another avoidance rule, a priority of a parameter corresponding to the UE with a priority of a parameter corresponding to another system or device that is using the unlicensed carrier; and
if it is determined, by means of comparison according to the avoidance rule or the another avoidance rule, that the priority of the parameter corresponding to the UE is higher than the priority of the parameter corresponding to the another system or device that is using the unlicensed carrier, transmitting the uplink data at the specified location of the unlicensed carrier; or
if it is determined, by means of comparison according to the avoidance rule or the another avoidance rule, that the priority of the parameter corresponding to the UE is lower than the priority of the parameter corresponding to the another system or device that is using the unlicensed carrier, stopping the uplink data transmission at the specified location of the unlicensed carrier; where
the parameter is a transmission system type, a transmission device identifier, or a transmission user identifier.

With reference to the fourth possible implementation manner of the first aspect, in a fifth possible implementation manner of the first aspect, the detecting, by the UE, whether another system or device is using the unlicensed carrier at the specified location includes:
detecting, by the UE, whether a signal of another system or device on the unlicensed carrier exceeds a preset threshold; or
detecting, by the UE, whether the base station sends indication information, where the indication information is information that the unlicensed carrier is occupied by another system or device.

With reference to the first aspect or any oft the possible implementation manners of the first aspect, in a sixth possible implementation manner of the first aspect, the uplink transmission grant is a statically configured, semi-persistently scheduled, or dynamically scheduled uplink transmission grant, or a hybrid automatic repeat request HARQ feedback grant stipulated in a protocol.

With reference to the sixth possible implementation manner of the first aspect, in an seventh possible implementation manner of the first aspect, the method further includes: sending interference report information to the base station, where the interference report information includes at least one of a type of an interfering system, an identifier of an interfering device, an interference time period or occupation pattern, or a strength of an interference signal.

With reference to the third possible implementation manner of the first aspect, in an eighth possible implementation manner of the first aspect, the another avoidance rule includes:
a type of a transmission system that preferentially uses the unlicensed carrier, an identifier of a transmission device that preferentially uses the unlicensed carrier, or an identifier of a transmission user that preferentially uses the unlicensed carrier.

A second aspect of the embodiments of the present invention provides a data processing method in a base station, including: acquiring capability information of user equipment UE; and
determining, according to the capability information of the UE, whether the UE has a capability of supporting an unlicensed carrier; and if the UE has the capability of supporting the unlicensed carrier, allocating the unlicensed carrier to the UE, and sending an uplink transmission grant to the UE, where the uplink transmission grant is used to schedule the UE to perform uplink data transmission at a specified location of the unlicensed carrier, so that the UE transmits uplink data or stops the uplink data transmission at the specified location of the unlicensed carrier according to an acquired avoidance rule if the UE detects after the reception of the uplink transmission grant and before performing the uplink data transmission - as in claim 1 that another system or device is using the unlicensed carrier at the specified location, wherein the avoidance rule includes:
at least one of a type of a transmission system that preferentially uses the unlicensed carrier, an identifier of a transmission device that preferentially uses the unlicensed carrier, an identifier of a transmission user that preferentially uses the unlicensed carrier, or the avoidance threshold for using the unlicensed carrier by the UE - as claim 1.

With reference to the second aspect, in a first possible implementation manner of the second aspect, the method further includes: sending an avoidance rule for performing uplink transmission on the unlicensed carrier to the UE.

With reference to the first possible implementation manner of the second aspect, in a second possible implementation manner of the second aspect, the acquiring capability information of user equipment UE specifically includes:
receiving a report message sent by the UE, where the report message includes the capability information of the UE; or
sending a query message that carries an identifier of the UE to a core network device, and receiving a query response message returned by the core network device, where the query response message includes the capability information of the UE.

With reference to the first possible implementation manner of the second aspect, in a third possible implementation manner of the second aspect, the capability information of the UE includes:
at least one of a frequency band supported by the UE, bandwidth supported by the UE, or whether the UE supports dynamic frequency selection.

With reference to the second aspect or any possible implementation manner of the second aspect, in a fourth possible implementation manner of the second aspect, the method further includes:
sending indication information to the UE, where the indication information is information that the unlicensed carrier is occupied by another system or device, so that the UE determines, according to the indication message, whether another system or device is using the unlicensed carrier at the specified location.

With reference to the fourth possible implementation manner of the second aspect, in a fifth possible implementation manner of the second aspect, the uplink transmission grant is a statically configured, semi-persistently scheduled, or dynamically scheduled uplink transmission grant, or a hybrid automatic repeat request HARQ feedback grant stipulated in a protocol.

With reference to the fifth possible implementation manner of the first aspect, in a sixth possible implementation manner of the first aspect, the method further includes:
receiving interference report information sent by the UE, where the interference report information is at least one of a type of an interfering system, an identifier of an interfering device, an interference time period or occupation pattern, or a strength of an interference signal.

A third aspect of the embodiments of the present invention provides a data processing apparatus, including:
a transceiver module, configured to receive an uplink transmission grant sent by a base station, where the uplink transmission grant is used to schedule the UE to perform uplink data transmission at a specified location of an unlicensed carrier;
a detection module, configured to detect after the reception of the uplink transmission grant and before performing the uplink data transmission as claim 1 whether another system or device is using the unlicensed carrier at the specified location; and
a processing module, configured to: if the detection module detects that another system or device is using the unlicensed carrier at the specified location, transmit uplink data or stop the uplink data transmission at the specified location of the unlicensed carrier according to an acquired avoidance rule, wherein the avoidance rule includes:
at least one of a type of a transmission system that preferentially uses the unlicensed carrier, an identifier of a transmission device that preferentially uses the unlicensed carrier, an identifier of a transmission user that preferentially uses the unlicensed carrier, or the avoidance threshold for using the unlicensed carrier by the UE as claim 1.

With reference to the third aspect, in a first possible implementation manner of the third aspect, the transceiver module is further configured to receive the avoidance rule sent by the base station, where the avoidance rule is an avoidance rule for performing uplink transmission on the unlicensed carrier by the UE.

With reference to the first possible implementation manner of the third aspect, in a second possible implementation manner of the third aspect, the processing module is specifically configured to: if the detection module detects that another system or device is using the unlicensed carrier at the specified location, transmit the uplink data or stop the uplink data transmission at the specified location of the unlicensed carrier according to the avoidance rule stipulated in a communications protocol, where the avoidance rule is an avoidance rule for performing uplink transmission on the unlicensed carrier by the UE.

With reference to the first or the second possible implementation manner of the third aspect, in a third possible implementation manner of the third aspect, before the transceiver module receives the uplink transmission grant sent by the base station, the transceiver module is further configured to send a report message to the base station, where the report message carries capability information of the user equipment UE, so that the base station allocates the unlicensed carrier and the specified location of the unlicensed carrier to the UE and sends the uplink transmission grant to the UE when the base station determines, according to the capability information of the UE, that the UE has a capability of supporting the unlicensed carrier, to schedule the UE to perform the uplink data transmission at the specified location of the unlicensed carrier; where
the capability information of the UE includes at least one of a frequency band supported by the UE, bandwidth supported by the UE, or that the UE supports dynamic frequency selection.

With reference to the first possible implementation manner of the third aspect, in a fourth possible implementation manner of the third aspect, the processing module includes:
a comparison unit, configured to: when the acquired avoidance rule is an avoidance threshold for using the unlicensed carrier by the UE, compare the avoidance threshold with a strength of an interference signal of the unlicensed carrier; and
a processing unit, configured to: if the strength of the interference signal of the unlicensed carrier is less than the avoidance threshold, transmit the uplink data at the specified location of the unlicensed carrier; where:
   the processing unit is further configured to: if the strength of the interference signal of the unlicensed carrier is greater than or equal to the avoidance threshold, and another avoidance rule except the avoidance threshold for using the unlicensed carrier by the UE is acquired, transmit the uplink data or stop the uplink data transmission at the specified location of the unlicensed carrier according to the another avoidance rule; or
   the processing unit is further configured to: if the strength of the interference signal of the unlicensed carrier is greater than or equal to the avoidance threshold, and another avoidance rule except the avoidance threshold for using the unlicensed carrier by the UE is not acquired, stop the uplink data transmission at the specified location of the unlicensed carrier.

With reference to the third aspect or the fourth possible implementation manner of the third aspect, in a fifth possible implementation manner of the third aspect, the comparison unit is further configured to compare, according to the avoidance rule or the another avoidance rule, a priority of a parameter corresponding to the UE with a priority of a parameter corresponding to another system or device that is using the unlicensed carrier; and
the processing unit is further configured to: if it is determined, by means of comparison according to the avoidance rule or the another avoidance rule, that the priority of the parameter corresponding to the UE is higher than the priority of the parameter corresponding to the another system or device that is using the unlicensed carrier, transmit the uplink data at the specified location of the unlicensed carrier; or
the processing unit is further configured to: if it is determined, by means of comparison according to the avoidance rule or the another avoidance rule, that the priority of the parameter corresponding to the UE is lower than the priority of the parameter corresponding to the another system or device that is using the unlicensed carrier, stop the uplink data transmission at the specified location of the unlicensed carrier; where
the parameter is a transmission system type, a transmission device identifier, or a transmission user identifier.

With reference to the fifth possible implementation manner of the third aspect, in a sixth possible implementation manner of the third aspect, the detection module is specifically configured to detect whether a signal of another system or device on the unlicensed carrier exceeds a preset threshold; or
the detection module is specifically configured to detect whether the base station sends indication information, where the indication information is information that the unlicensed carrier is occupied by another system or device.

With reference to the sixth possible implementation manner of the third aspect, in a seventh possible implementation manner of the third aspect, the transceiver module is further configured to send interference report information to the base station, where the interference report information includes at least one of a type of an interfering system, an identifier of an interfering device, an interference time period or occupation pattern, or a strength of an interference signal.

A fourth aspect of the embodiments of the present invention provides a data processing apparatus, including:
an acquiring module, configured to acquire capability information of user equipment UE;
a processing module, configured to determine, according to the capability information of the UE, whether the UE supports an unlicensed carrier; and
a transceiver module, configured to: if the processing module determines that the UE supports the unlicensed carrier, send an uplink transmission grant to the UE, where the uplink transmission grant is used to schedule the UE to perform uplink data transmission at a specified location of the unlicensed carrier, so that the UE transmits uplink data or stops the uplink data transmission at the specified location of the unlicensed carrier according to an acquired avoidance rule if the UE detects after the reception of the uplink transmission grant and before performing the uplink data transmission - as in claim 1 that another system or device is using the unlicensed carrier at the specified location, wherein the avoidance rule includes:
at least one of a type of a transmission system that preferentially uses the unlicensed carrier, an identifier of a transmission device that preferentially uses the unlicensed carrier, an identifier of a transmission user that preferentially uses the unlicensed carrier, or the avoidance threshold for using the unlicensed carrier by the UE.

With reference to the fourth aspect, in a first possible implementation manner of the fourth aspect, the transceiver module is further configured to send an avoidance rule for performing uplink transmission on the unlicensed carrier to the UE.

With reference to the first possible implementation manner of the fourth aspect, in a second possible implementation manner of the fourth aspect, the acquiring module is specifically configured to receive a report message sent by the user equipment, where the report message includes the capability information of the UE; or
send a query message that carries an identifier of the UE to a core network device, and receive a query response message returned by the core network device, where the query response message includes the capability information of the UE.

With reference to the first possible implementation manner of the fourth aspect, in a third possible implementation manner of the fourth aspect, the transceiver module is further configured to send indication information to the UE, where the indication information is information that the unlicensed carrier is occupied by another system or device, so that the UE determines, according to the indication message, whether another system or device is using the unlicensed carrier at the specified location.

With reference to the third possible implementation manner of the fourth aspect, in a fourth possible implementation manner of the fourth aspect, the transceiver module is further configured to receive interference report information sent by the user equipment, where the interference report information is at least one of a type of
an interfering system, an identifier of an interfering device, an interference time period or occupation pattern, or a strength of an interference signal.

A fifth aspect of the embodiments of the present invention provides user equipment, including: a processor and a memory, where the memory stores an execution instruction; and when the user equipment runs, the processor communicates with the memory, and the processor executes the execution instruction to enable the user equipment to perform the method provided in the first aspect.

A sixth aspect of the embodiments of the present invention provides a base station, including: a processor and a memory, where the memory stores an execution instruction; and when user equipment runs, the processor communicates with the memory, and the processor executes the execution instruction to enable the base station to perform the method provided in the second aspect.

According to the data processing method and apparatus that are provided in the embodiments of the present invention, user equipment acquires an avoidance rule for performing uplink data transmission at a specified location of an unlicensed carrier, detects whether another system or device is using the unlicensed carrier at the specified location, and determines, according to the avoidance rule, to continue transmitting uplink data or stop uplink data transmission for temporarily avoiding another device or system at the specified location of the unlicensed carrier, which resolves the prior-art problems of signal interference and low efficiency of scheduling between multiple users that are caused because multiple devices or system cannot coexist properly on an acquired unlicensed carrier, and therefore, transmission efficiency of multiple users on an unlicensed carrier is effectively improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of a data processing method according to the present invention;
FIG. 2 is a flowchart of Embodiment 2 of a data processing method according to the present invention;
FIG. 3 is a flowchart of Embodiment 5 of a data processing method according to the present invention;
FIG. 4 is a flowchart of Embodiment 6 of a data processing method according to the present invention;
FIG. 5 is a schematic structural diagram of Embodiment 1 of a data processing apparatus according to the present invention;
FIG. 6 is a schematic structural diagram of Embodiment 5 of a data processing apparatus according to the present invention;
FIG. 7 is a schematic structural diagram of an embodiment of user equipment according to the present invention; and
FIG. 8 is a schematic structural diagram of an embodiment of a base station according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

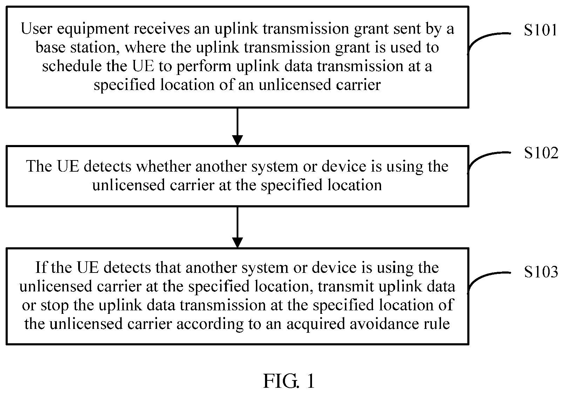

FIG. 1 is a flowchart of Embodiment 1 of a data processing method according to the present invention. The technical solution of the present invention may be applied to a scenario in which a radio communications system such as an LTE system, the Universal Mobile Telecommunications System (Universal Mobile Telecommunications System, UMTS for short), WiFi, radar, or Bluetooth uses an unlicensed carrier. As shown in FIG. 1, steps of the method in this embodiment are specifically:
S101: User equipment (User Equipment, UE for short) receives an uplink transmission grant sent by a base station, where the uplink transmission grant is used to schedule the UE to perform uplink data transmission at a specified location of an unlicensed carrier.

The specified location is a specified time-frequency location on the unlicensed carrier, for example, a specified subframe, a specified orthogonal frequency division multiplexing technology (Orthogonal Frequency Division Multiplexing, OFDM for short) symbol, or a specified OFDM symbol block (several OFDM symbols). From a frequency dimension, the specified location may be a specified physical resource block (Physical Resource Block, PRB for short), a specified PRB group, or the like.

In this embodiment, the unlicensed carrier is shared by many users, and devices that belong to these users may use different radio access technologies, such as LTE, wifi, or Bluetooth. In addition, for example, the unlicensed carrier may be used as an LTE carrier, that is, a U-LTE cell.

In addition, preferably, in this embodiment, a type of transmission data of the uplink transmission grant may be uplink data based on dynamic scheduling performed by the base station, or uplink transmission information configured based on a radio resource control protocol (Radio Resource Control, RRC for short), such as a periodic sounding reference signal (Sounding Reference Signal, SRS for short), a channel status indicator (Channel Status Indicator, CSI for short), or a scheduling request (Scheduling Request, SR for short); and the transmission data of the uplink transmission grant may also be uplink data configured based on semi-persistent scheduling, or information about a hybrid automatic repeat request (Hybrid Automatic Repeat Request, HARQ for short) for feeding back a receiving state of downlink data, but this embodiment is not limited thereto.

S102: The UE detects whether another system or device is using the unlicensed carrier at the specified location.

S103: If the UE detects that another system or device is using the unlicensed carrier at the specified location, transmit uplink data or stop the uplink data transmission at the specified location of the unlicensed carrier according to an acquired avoidance rule.

In this embodiment, after receiving the uplink transmission grant sent by the base station, the UE detects whether another system or device is using the specified location of the unlicensed carrier. If it is detected that another system or device is not using the subframe, the UE directly transmits, at the specified location of the unlicensed carrier, the uplink data that needs to be transmitted. If it is detected that another system or device is using the subframe at the specified location of the unlicensed carrier, the UE needs to acquire an avoidance rule of transmitting at the specified location, and determines, according to the avoidance rule, to continue transmitting uplink data or suspend transmission for avoidance at the specified location.

According to the data processing method provided in this embodiment, UE receives an uplink transmission grant sent by a base station, where the uplink transmission grant is used to schedule the UE to perform uplink data transmission at a specified location of an unlicensed carrier; and if it is detected that another system or user equipment is using the unlicensed carrier at the specified location, the UE determines, according to an acquired avoidance rule, to continue transmitting uplink data or stop the uplink data transmission for temporarily avoiding another user equipment or system at the specified location of the unlicensed carrier; therefore, signal interference on another user equipment or system on the unlicensed carrier caused by contention-based sending is avoided, and efficiency of scheduling between multiple users on the unlicensed carrier is improved.

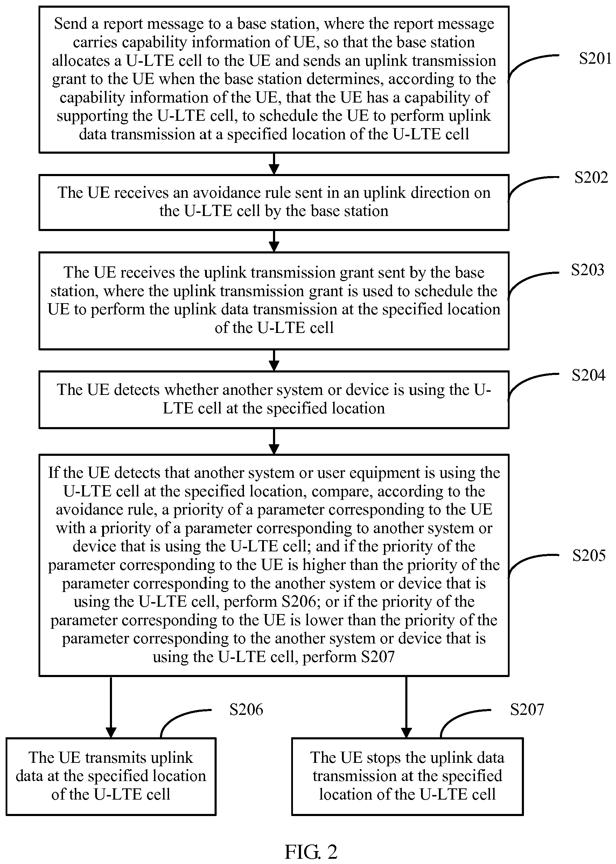

FIG. 2 is a flowchart of Embodiment 2 of a data processing method according to the present invention. In this embodiment, an unlicensed LTE carrier U-LTE cell is used as an example. As shown in FIG. 2, steps of the method in this embodiment are:
S201: Send a report message to a base station, where the report message carries capability information of UE, so that the base station allocates a U-LTE cell to the UE and sends an uplink transmission grant to the UE when the base station determines, according to the capability information of the UE, that the UE has a capability of supporting the U-LTE cell, to schedule the UE to perform uplink data transmission at a specified location of the U-LTE cell.

In this embodiment, the UE reports the capability information of the UE to the base station, where the capability information includes information such as a frequency band supported by the UE, bandwidth supported by the UE, and whether the UE supports dynamic frequency selection. The base station determines, according to the capability information, whether the UE has the capability of supporting the U-LTE cell, and if the UE has the capability of supporting the U-LTE cell, the base station allocates the U-LTE cell to the UE, and may further configure a subframe (that is, a specified location) on the allocated U-LTE cell for the UE to perform the uplink data transmission.

In addition, it should be noted that, in a case in which the UE does not need a higher peak transmission rate and a load of a cell in which the UE is located is relatively low, the UE may carry a data transmission task by using a primary carrier, that is, perform the uplink data transmission by using the primary carrier. In a case in which the UE needs a higher transmission rate or a load of a serving cell in which the UE is located is relatively high, the base station may configure the U-LTE cell as a secondary carrier, so that the UE performs the uplink data transmission on the secondary carrier, where the U-LTE cell may belong to a same base station as the primary carrier used by the UE, or the U-LTE cell and the primary carrier may belong to different base stations.

S202: The UE receives an avoidance rule sent in an uplink direction on the U-LTE cell by the base station.

In this embodiment, the unlicensed carrier used by the UE may be the same as an unlicensed carrier that is used, by means of contention, by another device or system (such as wifi, Bluetooth, or radar) and an LTE system of another operator; therefore, when the UE performs the uplink data transmission at the specified location of the U-LTE cell, the UE needs to acquire an avoidance rule for performing the uplink data transmission at the specified location of the U-LTE cell, and determines, according to the avoidance rule, whether to perform the uplink data transmission, so as to avoid signal interference on another user equipment or system on the U-LTE cell caused by contention-based sending. The UE may receive the avoidance rule for performing uplink transmission in the U-LTE cell sent by the base station.

Preferably, another specific implementation manner of S202 is:
stipulating, according to a communications protocol, the avoidance rule for performing uplink transmission in the U-LTE cell by the UE.

In this embodiment, the UE stipulates, according to the communications protocol, the avoidance rule for performing the uplink transmission in the U-LTE cell. For example, that radar has a highest priority in a process of using an unlicensed carrier in the frequency range of 5600 MHz-5650 MHz may be stipulated in the communications protocol, and if the UE wants to use a carrier in the frequency range, the UE needs to acquire the stipulation and uses the stipulation as the avoidance rule. The communications protocol is generally a communications protocol formulated by a related organization such as the 3rd Generation Partnership Project (The 3rd Generation Partnership Project, 3GPP for short), the European Telecommunications Standards Institute (European Telecommunications Standards Institute, ETSI for short), or the Federal Communications Commission (Federal Communications Commission, FCC for short).

In this embodiment, the UE may receive at least one avoidance rule from the base station, and the received avoidance rule may be an avoidance threshold for using the U-LTE cell by the UE, and/or may further be another avoidance rule, for example, a type of a transmission system that preferentially uses the U-LTE cell, an identifier of a transmission device that preferentially uses the U-LTE cell, and/or an identifier of a transmission user that preferentially uses the U-LTE cell.

In addition, preferably, the type of the transmission system that preferentially uses the U-LTE cell, the identifier of the transmission device that preferentially uses the U-LTE cell, and/or the identifier of the transmission user that preferentially uses the U-LTE cell may be defined based on a time period or a frequency, that is, for different time periods or different frequencies, priorities may be set differently.

For example, for LTE systems LTE 1 and LTE 2 of two different operators, an unlicensed carrier may be shared in a manner of negotiating in advance, eight milliseconds is a period in terms of time, and LTE systems of the two operators continuously use four milliseconds respectively. In the first four milliseconds of the period, a priority of the LTE 1 system is higher than a priority of the LTE 2 system, that is, the LTE 1 system preferentially uses the unlicensed carrier. In the later four milliseconds of the period, the priority of the LTE 1 system is lower than the priority of the LTE 2 system. A negotiation result is generally presented by using an occupation pattern. Certainly, negotiation on use of an unlicensed carrier may also be performed in terms of frequency, for example, two LTE systems respectively use different 20 MHz unlicensed carriers, or respectively use PRBs corresponding to the first 10 MHz and the second 10 MHz of a same 20 MHz unlicensed carrier, that is, a priority of the LTE 1 system on a PRB corresponding to the first 10 MHz of the 20 MHz unlicensed carrier is higher than a priority of the LTE 2 system, and the priority of the LTE 1 system on a PRB corresponding to the second 10 MHz of the 20 MHz unlicensed carrier is lower than the priority of the LTE 2 system. For the negotiations between operators, a base station may notify in advance, at a stipulated time-frequency location, information such as a situation of occupying an unlicensed carrier by the base station itself, and even whether the base station agrees that a priority resource of the base station itself is preempted; a time-frequency location of base stations for notification in advance is stipulated in a protocol or negotiated by the base stations.

S203: The UE receives the uplink transmission grant sent by the base station, where the uplink transmission grant is used to schedule the UE to perform the uplink data transmission at the specified location of the U-LTE cell.

In this embodiment, the UE receives the uplink transmission grant sent by the base station, and performs the uplink data transmission at the specified location according to scheduling of the base station. The specified location is a specified time-frequency location on the unlicensed carrier, such as a specified subframe, a specified OFDM symbol, or a specified OFDM symbol block (several OFDM symbols). From a frequency dimension, the specified location may be a specified PRB, a specified PRB group, or the like.

S204: The UE detects whether another system or device is using the U-LTE cell at the specified location.

In this embodiment, preferably, in S204, the UE may detect, in the following two manners, whether another system or device is using the U-LTE cell at the specified location.

The UE detects whether signal interference of another system or device exists on the U-LTE cell, and whether the signal interference exceeds a preset threshold. Alternatively,
the UE detects whether indication information, sent by the base station, that the U-LTE cell is occupied by another system or device is received, and determines, according to the indication information, whether another device is using the U-LTE cell.

S205: If the UE detects that another system or user equipment is using the U-LTE cell at the specified location, compare, according to the avoidance rule, a priority of a parameter corresponding to the UE with a priority of a parameter corresponding to another system or device that is using the U-LTE cell; and if the priority of the parameter corresponding to the UE is higher than the priority of the parameter corresponding to the another system or device that is using the U-LTE cell, perform S206; or if the priority of the parameter corresponding to the UE is lower than the priority of the parameter corresponding to the another system or device that is using the U-LTE cell, perform S207. In this embodiment, a case in which the priority of the parameter corresponding to the UE is equal to the priority of the parameter corresponding to another system or device that is using the U-LTE cell is not limited in the present invention, and the UE may contend with another system or device for sending uplink data.

S206: The UE transmits uplink data at the specified location of the U-LTE cell. End.

S207: The UE stops the uplink data transmission at the specified location of the U-LTE cell.

In this embodiment, the parameter is a transmission system type, a transmission device identifier, or a transmission user identifier.

According to the data processing method provided in this embodiment, UE reports capability information of the UE to a base station, so that the base station determines, according to the capability information, whether the UE can perform uplink data transmission at a specified location of an unlicensed carrier; and the UE receives an uplink transmission grant sent by the base station, and before performing the uplink data transmission, the UE acquires an avoidance rule for performing the uplink data transmission at the specified location, detects whether another system or device is using the unlicensed carrier at the specified location of the unlicensed carrier, and determines, according to the acquired avoidance rule, to continue transmitting uplink data or stop the uplink data transmission for temporarily avoiding another device or system at the specified location of the U-LTE cell; therefore, signal interference on another user equipment or system on the unlicensed carrier caused by contention-based sending is avoided, and efficiency of scheduling between multiple users on the unlicensed carrier is improved.

Further, in Embodiment 3 of a data processing method according to the present invention, based on the foregoing embodiment shown in FIG. 2, the avoidance rule may be specifically: an avoidance threshold for using the U-LTE cell by the UE, and then another specific implementation manner of S205 is: determining, according to the avoidance rule, whether an interference signal of another system or user equipment that is using the U-LTE cell is less than the avoidance threshold for using the U-LTE cell by the UE; and if the interference signal of another system or user equipment that is using the U-LTE cell is less than the avoidance threshold for using the U-LTE cell by the UE, performing S206; or if the interference signal of another system or user equipment that is using the U-LTE cell is greater than or equal to the avoidance threshold for using the U-LTE cell by the UE, performing S207.

In this embodiment, an avoidance threshold is configured for the UE for avoiding another system or device, or an avoidance threshold is configured for each other system or device, or an avoidance threshold is configured for several other systems or devices; and when the acquired avoidance rule is the avoidance threshold for using the unlicensed carrier by the UE, the avoidance threshold is compared with a strength of an interference signal of the unlicensed carrier. If the strength of the interference signal of the unlicensed carrier is less than the avoidance threshold, the uplink data is transmitted at the specified location of the unlicensed carrier.

If the strength of the interference signal of the unlicensed carrier is greater than or equal to the avoidance threshold, and another avoidance rule except the avoidance threshold for using the unlicensed carrier by the UE is acquired, the uplink data is transmitted or the uplink data transmission is stopped at the specified location of the unlicensed carrier according to the another avoidance rule.

If the strength of the interference signal of the unlicensed carrier is greater than or equal to the avoidance threshold, and another avoidance rule except the avoidance threshold for using the unlicensed carrier by the UE is not acquired, the uplink data transmission is stopped at the specified location of the unlicensed carrier.

The another avoidance rule includes the type of the transmission system that preferentially uses the U-LTE cell, the identifier of the transmission device that preferentially uses the U-LTE cell, or the identifier of the transmission user that preferentially uses the U-LTE cell. Another system is another operator system or WiFi, radar, Bluetooth, or the like. The avoidance threshold may be a received signal strength indicator (Received Signal Strength Indicator, RSSI for short) of an interference signal, or reference signal received power (Reference Signal Received Power, RSRP for short) or reference signal received quality (Reference Signal Received Quality, RSPQ) of a corresponding system. That is, after learning that another system or device is using the unlicensed carrier corresponding to the U-LTE cell at a location at which uplink transmission is to be performed, the UE needs to compare an RSSI, RSRP, or RSRQ of an interference signal of another system or device with a set RSSI, RSRP, or RSRQ of the avoidance threshold; and if the RSSI, the RSRP, or the RSRQ of another system or device is less than the set avoidance threshold, the UE does not perform avoidance (that is, uplink transmission is performed as planned); otherwise, whether to perform avoidance is determined according to another avoidance rule together.

It should be noted that, in addition to the type of the transmission system that preferentially uses the U-LTE cell, the identifier of the transmission device that preferentially uses the U-LTE cell, the identifier of the transmission user that preferentially uses the U-LTE cell, or the avoidance threshold, the avoidance rule may further be another rule, which is not limited in the present invention.

Furthermore, in Embodiment 4 of a data processing method according to the present invention, based on the foregoing embodiment shown in FIG. 1 or FIG. 2, S102 or S204 may further be specifically: determining, by the UE by using a base station indication, or a network allocation vector (Network Allocation Vector, NAV for short) or an unlicensed carrier occupation pattern sent by another radio access technology or device, whether the specified location is occupied by another system or device. If the UE cannot obtain an NAV or an occupation pattern corresponding to occupation of the U-LTE cell by another radio access technology or device (for example, interference is from a microwave oven, or interference is from WiFi, but the UE does not provide a function of parsing a WiFi signal), the UE may determine, according to a situation during a short time preceding the specified location, whether the specified location is occupied by another radio access technology or device. The short time preceding the specified location generally depends on a shortest required time from determining, by the UE, whether the specified location is occupied to performing uplink transmission by the UE.

In addition, optionally, the method may further include:
when the UE detects that another system or device is using the U-LTE cell at the specified location, sending interference report information to the base station for interference report, where the interference report information includes at least one of a type of an interfering system, an identifier of an interfering device, an interfering time domain or occupation pattern, or a strength of an interference signal.

In this embodiment, the interference report information may be controlled by a set interference report threshold, and the interference report threshold is a preset value, that is, reporting is performed only when the UE detects that another system or device is using the U-LTE cell and causes signal interference on the UE, and the UE needs to detect whether an RSSI, RSRP, or RSRQ of the interference signal is greater than the set interference report threshold, and the interference reporting is only applicable to a scenario in which the UE detects by itself that another system or device is using the U-LTE cell at the specified location.

More specifically, the UE may further report interference information by using an MAC CE or a pre-configured physical layer resource, to improve timeliness of reporting.

According to the data processing method provided in this embodiment, UE reports capability information of the UE to a base station; and the UE receives an uplink transmission grant sent by the base station, and before performing uplink data transmission, the UE acquires an avoidance rule for performing the uplink data transmission at the specified location, detects whether another system or device is using a U-LTE cell at a specified location of the U-LTE cell, determines, according to the acquired avoidance rule, to continue transmitting uplink data or stop the uplink data transmission for temporarily avoiding another device or system at the specified location of the U-LTE cell, and sends interference report information to the base station when detecting that another system or device is using the U-LTE cell; therefore, signal interference on another user equipment or system on the unlicensed carrier caused by contention-based sending is avoided, and transmission efficiency and efficiency of scheduling between multiple users on the unlicensed carrier are improved.

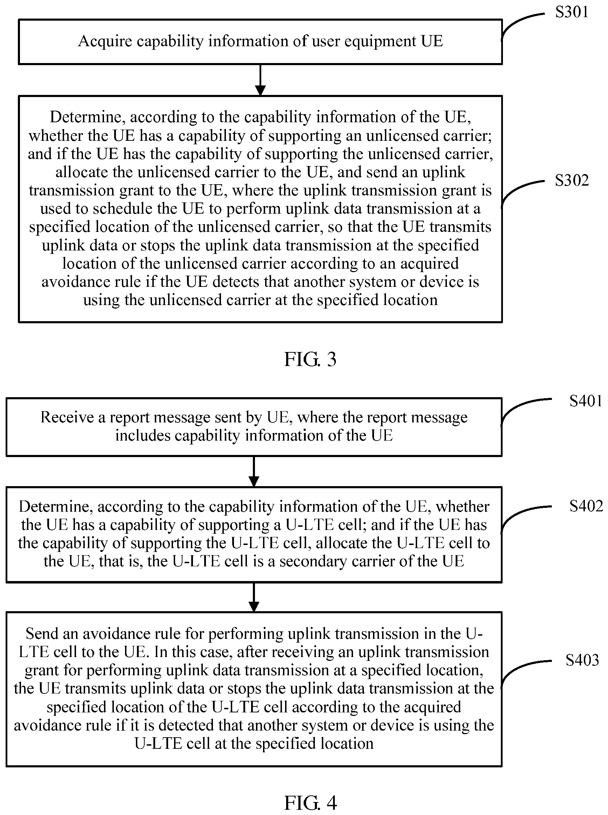

FIG. 3 is a flowchart of Embodiment 5 of a data processing method according to the present invention. As shown in FIG. 3, steps of the method in this embodiment are specifically:
S301: Acquire capability information of user equipment UE.

In this embodiment, before configuring an unlicensed carrier for the UE, a base station needs to obtain the capability information of the UE, and determines whether the UE has a capability of supporting the unlicensed carrier.

S302: Determine, according to the capability information of the UE, whether the UE has a capability of supporting an unlicensed carrier; and if the UE has the capability of supporting the unlicensed carrier, allocate the unlicensed carrier to the UE, and send an uplink transmission grant to the UE, where the uplink transmission grant is used to schedule the UE to perform uplink data transmission at a specified location of the unlicensed carrier, so that the UE transmits uplink data or stops the uplink data transmission at the specified location of the unlicensed carrier according to an acquired avoidance rule if the UE detects that another system or device is using the unlicensed carrier at the specified location.

In this embodiment, an unlicensed LTE carrier U-LTE cell is used as an example; in a case in which the UE needs a higher transmission rate or a load of a serving cell in which the UE is located is relatively high, if the base station determines, according to the acquired capability information of the UE, that the UE supports the U-LTE cell, the base station configures the U-LTE cell as a secondary carrier of the UE, where the UE performs the uplink data transmission in the U-LTE cell, and the base station sends the uplink transmission grant to the UE, to schedule the UE to perform the uplink data transmission at the specified location of the U-LTE cell, so that the UE determines, according to the acquired avoidance rule, to perform the uplink data transmission or suspend the transmission for performing avoidance at the specified location of the U-LTE cell. In addition, a type of the uplink transmission grant may be the uplink transmission grant sent by the base station, or may be a resource grant configured based on RRC, such as an SRS, a CSI, or an SR; and the uplink transmission grant may also be an uplink transmission grant configured based on semi-persistent scheduling, or a grant of an HARQ for feeding back a receiving state of downlink data, but this embodiment is not limited thereto.

According to the data processing method provided in this embodiment, a base station acquires capability information of UE, and determines, according to the capability information, whether the UE can perform uplink data transmission on an unlicensed carrier; and the base station sends an uplink transmission grant to the UE. The UE detects whether another system or device is using the unlicensed carrier at a specified location of the unlicensed carrier, and determines, according to an acquired avoidance rule, to continue transmitting uplink data or stop the uplink data transmission for temporarily avoiding another device or system at the specified location of the unlicensed carrier; therefore, signal interference on another user equipment or system on the unlicensed carrier caused by contention-based sending is avoided, and efficiency of scheduling between multiple users on the unlicensed carrier is improved.

FIG. 4 is a flowchart of Embodiment 6 of a data processing method according to the present invention. In this embodiment, an unlicensed carrier U-LTE cell is used as an example. As shown in FIG. 4, steps of the method in this embodiment are:
S401: Receive a report message sent by UE, where the report message includes capability information of the UE.

In this embodiment, a base station receives report information sent by the UE, where the report information includes the capability information of the UE, and the capability information of the UE includes information such as a frequency band supported by the UE, bandwidth supported by the UE, and whether the UE supports dynamic frequency selection.

In addition, preferably, another specific implementation manner of S401 is:
sending, by the base station, a query message that carries an identifier of the UE to a core network device such as a mobility management entity (Mobility Management Entity, MME for short), and receiving a query response message returned by the core network device such as the MME, where the query response message includes the capability information of the UE, and the capability information of the UE also includes information such as a frequency band supported by the UE, bandwidth supported by the UE, and whether the UE supports dynamic frequency selection.

S402: Determine, according to the capability information of the UE, whether the UE has a capability of supporting a U-LTE cell; and if the UE has the capability of supporting the U-LTE cell, allocate the U-LTE cell to the UE, that is, the U-LTE cell is a secondary carrier of the UE.

In this embodiment, the base station determines, according to the capability information obtained in the foregoing step, whether the UE has the capability of supporting the U-LTE cell; and if the UE has the capability of supporting the U-LTE cell, the base station configures the U-LTE cell, for the UE, as the secondary carrier for uplink data transmission, so that the UE can perform the uplink data transmission at a specified location of the U-LTE cell.

S403: Send an uplink transmission grant for performing uplink transmission in the U-LTE cell to the UE. In this case, after receiving the uplink transmission grant for performing uplink transmission at a specified location, the UE transmits uplink data or stops the uplink data transmission at the specified location of the U-LTE cell according to an acquired avoidance rule if it is detected that another system or device is using the U-LTE cell at the specified location.

In addition, preferably, another specific implementation manner of S403 may be: negotiating, by base stations, for use of the unlicensed carrier, or stipulating the avoidance rule in a communications protocol, where the base station notifies, by broadcasting a system message, small cells that belong to the base station and may use the unlicensed carrier, and even each user equipment UE, of available unlicensed carriers in the base station and/or specified locations of the available unlicensed carriers, to reduce signal interference between unlicensed spectrums.

In this embodiment, it should be further noted that, a specific implementation manner of allocating a U-LTE cell to the UE, that is, allocating the U-LTE cell as a secondary carrier to the UE, is as follows: macro base stations negotiate to obtain a spectrum list of available unlicensed carriers, and a small cell in a service area is instructed to use the unlicensed carriers corresponding to the spectrum list; therefore, the small cell uses only the unlicensed carriers in the unlicensed carrier spectrum list. In addition, this embodiment further provides methods in which operators negotiate and select an unlicensed carrier.

In one manner, a base station 1 and a base station 2 have overlapping coverage or cross coverage, and a small cell 3 is covered by the base station 1. The base station 1 is a base station of an operator 1 that uses a licensed carrier, the base station 2 is a base station of an operator 2 that uses a licensed carrier, and the small cell 3 is a base station of the operator 1 that uses an unlicensed carrier. The base station 1 determines a spectrum list of unlicensed carriers used by the operator 1. The base station 2 determines a spectrum list of unlicensed carriers used by the operator 2. The base station 1 and the base station 2 negotiate, by using an X2 interface, an unlicensed spectrum list used by the base station 1 and an unlicensed spectrum list used by the base station 2, to reduce interference between spectrums of unlicensed carriers, and the base station 1 and the base station 2 negotiate their respective spectrums of unlicensed carriers. The base station 1 notifies the small cell 3 of a spectrum list of available unlicensed carriers, so that the small cell 3 uses only unlicensed carrier spectrums in the list.

In another feasible manner, after reporting, by using user equipment UE, a spectrum list 2 of unlicensed carriers used by an operator 2, a base station 1 determines a spectrum list 1 of available unlicensed carriers of the base station 1. The UE reads system information and the like of a base station 2, acquires the spectrum list 2 of the unlicensed carriers used by the operator 2, and reports the spectrum list 2 of the unlicensed carriers to the base station 1 by using an RRC dedicated message. The base station 1 determines, according to the spectrum list 2 of the unlicensed carriers, the spectrum list 1 of the unlicensed carriers used by an operator 1. The base station 1 delivers the spectrum list 1 of the unlicensed carriers to a small cell 3. The base station 1 broadcasts the spectrum list 1 of the unlicensed carriers by using a system message, or delivers the spectrum list 1 of the unlicensed carriers to the small cell 3 in a dedicated signaling manner. The small cell 3 determines spectrums of used unlicensed carriers from the spectrum list 1 of the unlicensed carriers.

According to the data processing method provided in this embodiment, a base station acquires capability information of UE, and determines, according to the capability information, whether the UE can perform uplink data transmission at a specified location of an unlicensed carrier; and the base station sends an uplink transmission grant to the UE, and sends an avoidance rule for performing the uplink data transmission on the unlicensed carrier to the UE, so that the UE detects whether another system or device is using the unlicensed carrier at the specified location of the unlicensed carrier, and determines, according to the acquired avoidance rule, to continue transmitting uplink data or stop the uplink data transmission for temporarily avoiding another device or system at the specified location of the unlicensed carrier; therefore, signal interference on another user equipment or system on the unlicensed carrier caused by contention-based sending is avoided, and efficiency of scheduling between multiple users on the unlicensed carrier is improved.

Further, in Embodiment 7 of a data processing method according to the present invention, based on the foregoing embodiment shown in FIG. 3 or FIG. 4, the data processing method according to the present invention may further include:
sending, by the base station, indication information to the UE, where the indication information is information that the U-LTE cell is occupied by another system or device, so that the UE determines, according to the indication message, whether another system or device is using the U-LTE cell at the specified location.

Optionally, the UE determines, by using the indication information sent by the base station, or a network allocation vector NAV or an unlicensed carrier occupation pattern sent by another radio access technology or device, whether the specified location is occupied by another radio access technology or device. If the UE cannot obtain an NAV or an occupation pattern corresponding to a situation that another radio access technology or device occupies the U-LTE cell (for example, interference is from a microwave oven, or interference is from WiFi, but the UE does not provide a function of parsing a WiFi signal), the UE may determine, according to a situation during a short time preceding the specified location, whether the specified location is occupied by another radio access technology or device. The short time preceding the specified location generally depends on a shortest required time from determining, by the UE, whether the specified location is occupied to performing uplink transmission by the UE.

Optionally, in addition to the uplink transmission grant sent by the base station, uplink transmission of the UE may further be an uplink transmission grant configured based on RRC, such as a periodic SRS, CSI, or SR; and the uplink transmission grant of the UE may also be an uplink transmission grant configured based on semi-persistent scheduling, or a grant of an HARQ for feeding back a receiving state of downlink data.

According to the data processing method provided in this embodiment, a base station acquires capability information of UE, and determines, according to the capability information, whether the UE can perform uplink data transmission at a specified location of an unlicensed carrier; the base station sends an uplink transmission grant to the UE, and sends an avoidance rule for performing the uplink data transmission on the unlicensed carrier to the UE; and the base station further sends indication information to the UE, so that the UE detects whether another system or device is using the unlicensed carrier at the specified location of the unlicensed carrier, and determines, according to the acquired avoidance rule, to continue transmitting uplink data or stop the uplink data transmission for temporarily avoiding another device or system at the specified location of the unlicensed carrier; therefore, signal interference on another user equipment or system on the unlicensed carrier caused by contention-based sending is avoided, and efficiency of scheduling between multiple users on the unlicensed carrier is improved.

Further, in Embodiment 8 of a data processing method according to the present invention, based on the foregoing embodiment shown in FIG. 3 or FIG. 4 and Embodiment 7, the data processing method according to the present invention may further include:
receiving, by the base station, interference report information sent by the UE, where the interference report information is at least one of a type of an interfering system, an identifier of an interfering device, an interference time period or occupation pattern, or a strength of an interference signal.

Optionally, the avoidance rule may further be the avoidance rule for performing uplink transmission in the U-LTE cell stipulated in a communications protocol, so that the UE determines the uplink data transmission according to the avoidance rule. For example, that radar has a highest permission in a range of 5600 MHz-5650 MHz may be stipulated in the protocol.

According to the data processing method provided in this embodiment, a base station acquires capability information of UE, and determines, according to the capability information, whether the UE can perform uplink data transmission at a specified location of an unlicensed carrier; and the base station sends an uplink transmission grant to the UE, so that the UE detects whether another system or device is using the unlicensed carrier at the specified location of the unlicensed carrier, and determines, according to an avoidance rule stipulated in a communications protocol in advance, to continue transmitting uplink data or stop the uplink data transmission for temporarily avoiding another device or system at the specified location of the unlicensed carrier; therefore, signal interference on another user equipment or system on the unlicensed carrier caused by contention-based sending is avoided, and efficiency of scheduling between multiple users on the unlicensed carrier is improved.

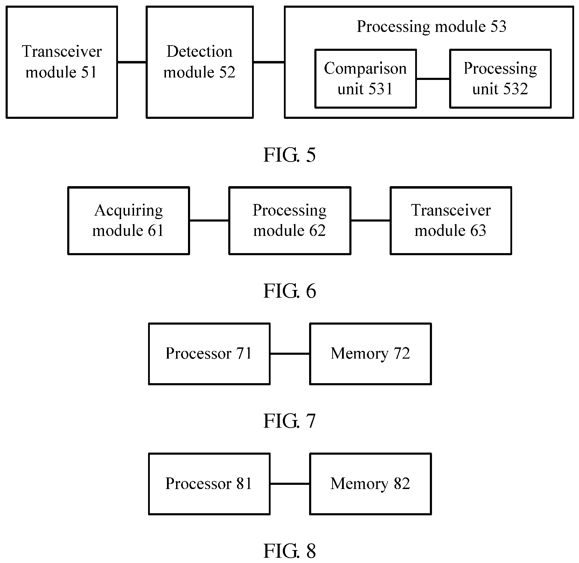

FIG. 5 is a schematic structural diagram of Embodiment 1 of a data processing apparatus according to the present invention. As shown in FIG. 5, the user equipment specifically includes a transceiver module 51, a detection module 52, and a processing module 53. The transceiver module 51 is configured to receive an uplink transmission grant sent by a base station, where the uplink transmission grant is used to schedule the UE to perform uplink data transmission at a specified location of an unlicensed carrier. The detection module 52 is configured to detect whether another system or device is using the unlicensed carrier at the specified location. The processing module 53 is configured to: if the detection module detects that another system or device is using the unlicensed carrier at the specified location, transmit uplink data or stop the uplink data transmission at the specified location of the unlicensed carrier according to an acquired avoidance rule.

The user equipment provided in this embodiment is configured to execute a technical solution of the method embodiment shown in FIG. 1, and implementation principles and beneficial effects are similar and are not described herein again.

Further, in Embodiment 2 of a data processing apparatus according to the present invention, based on the embodiment shown in FIG. 5, the transceiver module 51 is further configured to receive an avoidance rule sent in an uplink direction on the unlicensed carrier by the base station.

Preferably, the processing module 53 is specifically configured to: if the detection module 52 detects that another system or device is using the unlicensed carrier at the specified location, transmit the uplink data or stop the uplink data transmission at the specified location of the unlicensed carrier according to an avoidance rule for performing uplink transmission on the unlicensed carrier, where the avoidance rule is pre-configured for the UE according to a communications protocol.

Preferably, before the transceiver module 51 receives the uplink transmission grant sent by the base station, the transceiver module 51 is further configured to send a report message to the base station, where the report message carries capability information of the UE, so that the base station allocates the unlicensed carrier to the UE and sends the uplink transmission grant to the UE when the base station determines, according to the capability information of the UE, that the UE supports the unlicensed carrier, to schedule the UE to perform the uplink data transmission at the specified location of the unlicensed carrier; where the capability information of the UE includes at least one of a frequency band supported by the UE, bandwidth supported by the UE, or whether the UE supports dynamic frequency selection.

Further, in Embodiment 3 of a data processing apparatus according to the present invention, based on the foregoing Embodiment 1 and Embodiment 2 of the data processing apparatus, the processing module 53 may include a comparison unit 531 and a processing unit 532. The comparison unit 531 is configured to: when the acquired avoidance rule is an avoidance threshold for using the unlicensed carrier by the UE, compare the avoidance threshold with a strength of an interference signal of the unlicensed carrier. The processing unit 532 is configured to: if the strength of the interference signal of the unlicensed carrier is less than the avoidance threshold, transmit the uplink data at the specified location of the unlicensed carrier. The processing unit 532 is further configured to: if the strength of the interference signal of the unlicensed carrier is greater than or equal to the avoidance threshold, and another avoidance rule except the avoidance threshold for using the unlicensed carrier by the UE is acquired, transmit the uplink data or stop the uplink data transmission at the specified location of the unlicensed carrier according to the another avoidance rule. The processing unit 532 is further configured to: if the strength of the interference signal of the unlicensed carrier is greater than or equal to the avoidance threshold, and another avoidance rule except the avoidance threshold for using the unlicensed carrier by the UE is not acquired, stop the uplink data transmission at the specified location of the unlicensed carrier.

Preferably, the comparison unit 531 is further configured to compare, according to the avoidance rule or the another avoidance rule, a priority of a parameter corresponding to the UE with a priority of a parameter corresponding to another system or device that is using the unlicensed carrier. The processing unit 532 is further configured to: if it is determined, by means of comparison according to the avoidance rule or the another avoidance rule, that the priority of the parameter corresponding to the UE is higher than the priority of the parameter corresponding to the another system or device that is using the unlicensed carrier, transmit the uplink data at the specified location of the unlicensed carrier. The processing unit 532 is further configured to: if it is determined, by means of comparison according to the avoidance rule or the another avoidance rule, that the priority of the parameter corresponding to the UE is lower than the priority of the parameter corresponding to the another system or device that is using the unlicensed carrier, stop the uplink data transmission at the specified location of the unlicensed carrier, where the parameter is a transmission system type, a transmission device identifier, or a transmission user identifier.

The detection module 52 is specifically configured to detect whether a signal of another system or device on the unlicensed carrier exceeds a preset threshold. Alternatively,
the detection module 52 is specifically configured to detect whether the base station sends indication information, where the indication information is information that the unlicensed carrier is occupied by another system or device.

Further, in Embodiment 4 of a data processing apparatus according to the present invention, based on the foregoing apparatus embodiments, the transceiver module 51 is further configured to send interference report information to the base station, where the interference report information includes at least one of a type of an interfering system, an identifier of an interfering device, an interference time period or occupation pattern, or a strength of an interference signal.

The user equipment provided in this embodiment may execute a technical solution of the method embodiment shown in FIG. 2, and implementation principles and beneficial effects are similar and are not described herein again.

FIG. 6 is a schematic structural diagram of Embodiment 5 of a data processing apparatus according to the present invention. As shown in FIG. 6, the base station includes an acquiring module 61, a processing module 62, and a transceiver module 63. The acquiring module 61 is configured to acquire capability information of user equipment UE. The processing module 62 is configured to: determine, according to the capability information of the UE, whether the UE supports an unlicensed carrier; and if it is determined that the UE supports the unlicensed carrier, allocate the unlicensed carrier to the UE. The transceiver module 63 is configured to: if the processing module 62 determines that the UE supports the unlicensed carrier, send an uplink transmission grant to the UE, where the uplink transmission grant is used to schedule the UE to perform uplink data transmission at a specified location of the unlicensed carrier, so that the UE transmits uplink data or stops the uplink data transmission at the specified location of the unlicensed carrier according to an acquired avoidance rule if the UE detects that another system or device is using the unlicensed carrier at the specified location.

The base station provided in this embodiment is configured to execute a technical solution of the method embodiment shown in FIG. 3, and implementation principles and beneficial effects are similar and are not described herein again.

Further, in Embodiment 6 of a data processing apparatus according to the present invention, based on the embodiment shown in FIG. 6, the transceiver module 63 is configured to send an avoidance rule for performing uplink transmission on the unlicensed carrier to the UE.

Preferably, the acquiring module 61 is specifically configured to receive a report message sent by the user equipment, where the report message includes the capability information of the UE. Alternatively,
the acquiring module 61 is specifically configured to send a query message that carries an identifier of the UE to a core network device, and receive a query response message returned by the core network device, where the query response message includes the capability information of the UE, and the capability information of the UE includes a frequency band supported by the UE, bandwidth supported by the UE, and that the UE supports dynamic frequency selection.

Preferably, the transceiver module 63 is further configured to send indication information to the UE, where the indication information is information that the unlicensed carrier is occupied by another system or device, so that the UE determines, according to the indication message, whether another system or device is using the unlicensed carrier at the specified location.

Preferably, the transceiver module 63 is further configured to receive interference report information sent by the user equipment, where the interference report information is at least one of a type of an interfering system, an identifier of an interfering device, an interference time period or occupation pattern, or a strength of an interference signal.

The base station provided in this embodiment may execute a technical solution of the method embodiment shown in FIG. 4, and implementation principles and beneficial effects are similar and are not described herein again.

FIG. 7 is a schematic structural diagram of an embodiment of user equipment according to the present invention. As shown in FIG. 7, the user equipment includes a processor 71 and a memory 72, where the memory 72 stores an execution instruction; and when the user equipment runs, the processor 71 communicates with the memory 72, and the processor 71 executes the execution instruction to enable the user equipment to perform methods in technical solutions shown in FIG. 1 and FIG. 2.

FIG. 8 is a schematic structural diagram of an embodiment of a base station according to the present invention. As shown in FIG. 8, the base station includes a processor 81 and a memory 82, where the memory 82 stores an execution instruction; and when user equipment runs, the processor 81 communicates with the memory 82, and the processor 81 executes the execution instruction to enable the base station to perform methods in technical solutions shown in FIG. 3 and FIG. 4.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the invention as defined by the claims.

## Claims

1. A data processing method in a user equipment UE, comprising:
receiving, by the user equipment UE, an uplink transmission grant sent by a base station, wherein the uplink transmission grant is used to schedule the UE to perform uplink data transmission at a specified location of an unlicensed carrier (S101);
detecting, by the UE, after the reception of the uplink transmission grant and before performing the uplink data transmission whether another system or device is using the unlicensed carrier at the specified location (S102);
if the UE detects that another system or device is using the unlicensed carrier at the specified location, transmitting uplink data or stopping the uplink data transmission at the specified location of the unlicensed carrier according to an acquired avoidance rule (S103), and
wherein the avoidance rule comprises at least one of a type of a transmission system that preferentially uses the unlicensed carrier, an identifier of a transmission device that preferentially uses the unlicensed carrier, an identifier of a transmission user that preferentially uses the unlicensed carrier, or an avoidance threshold for using the unlicensed carrier by the UE, wherein a manner of acquiring the avoidance rule is:
receiving the avoidance rule sent by the base station (S202), wherein the avoidance rule is an avoidance rule for performing uplink transmission on the unlicensed carrier by the UE; or
stipulating the avoidance rule according to a communications protocol, wherein the avoidance rule is an avoidance rule for performing uplink transmission on the unlicensed carrier by the UE.

2. The method according to claim 1, wherein before the receiving, by user equipment UE, an uplink transmission grant sent by a base station (S203), the method further comprises:
sending a report message to the base station, wherein the report message carries capability information of the UE, so that the base station allocates the unlicensed carrier to the UE and sends the uplink transmission grant to the UE when the base station determines, according to the capability information of the UE, that the UE has a capability of supporting the unlicensed carrier, to schedule the UE to perform the uplink data transmission at the specified location of the unlicensed carrier (S201); wherein
the capability information of the UE comprises at least one of a frequency band supported by the UE, bandwidth supported by the UE, or whether the UE supports dynamic frequency selection (S201).

3. The method according to claim 2, wherein the transmitting uplink data or stopping the uplink data transmission at the specified location of the unlicensed carrier according to an acquired avoidance rule specifically comprises:
when the acquired avoidance rule is the avoidance threshold for using the unlicensed carrier by the UE, comparing the avoidance threshold with a strength of an interference signal of the unlicensed carrier; and
if the strength of the interference signal of the unlicensed carrier is less than the avoidance threshold, transmitting the uplink data at the specified location of the unlicensed carrier; or
if the strength of the interference signal of the unlicensed carrier is greater than or equal to the avoidance threshold, and another avoidance rule except the avoidance threshold for using the unlicensed carrier by the UE is acquired, transmitting the uplink data or stopping the uplink data transmission at the specified location of the unlicensed carrier according to the another avoidance rule; or
if the strength of the interference signal of the unlicensed carrier is greater than or equal to the avoidance threshold, and another avoidance rule except the avoidance threshold for using the unlicensed carrier by the UE is not acquired, stopping the uplink data transmission at the specified location of the unlicensed carrier.

4. The method according to claim 1 or 3, wherein the transmitting the uplink data or stopping the uplink data transmission at the specified location of the unlicensed carrier according to an acquired avoidance rule or the another avoidance rule specifically comprises:
comparing, according to the avoidance rule or the another avoidance rule, a priority of a parameter corresponding to the UE with a priority of a parameter corresponding to another system or device that is using the unlicensed carrier; and
if it is determined, by means of comparison according to the avoidance rule or the another avoidance rule, that the priority of the parameter corresponding to the UE is higher than the priority of the parameter corresponding to the another system or device that is using the unlicensed carrier (S205), transmitting the uplink data at the specified location of the unlicensed carrier (S207); or
if it is determined, by means of comparison according to the avoidance rule or the another avoidance rule, that the priority of the parameter corresponding to the UE is lower than the priority of the parameter corresponding to the another system or device that is using the unlicensed carrier (S205), stopping the uplink data transmission at the specified location of the unlicensed carrier (S207); wherein
the parameter is a transmission system type, a transmission device identifier, or a transmission user identifier.

5. The method according to claim 4, wherein the detecting, by the UE, whether another system or user equipment is using the unlicensed carrier at the specified location (S204) comprises:
detecting, by the UE, whether a signal of another system or user equipment on the unlicensed carrier exceeds a preset threshold; or
detecting, by the UE, whether the base station sends indication information, wherein the indication information is information that the unlicensed carrier is occupied by another system or device.

6. A data processing method in a base station, comprising:
acquiring capability information of user equipment UE (S301); and
determining, according to the capability information of the UE, whether the UE has a capability of supporting an unlicensed carrier; and if the UE has the capability of supporting the unlicensed carrier, allocating the unlicensed carrier to the UE, and sending an uplink transmission grant to the UE, wherein the uplink transmission grant is used to schedule the UE to perform uplink data transmission at a specified location of the unlicensed carrier, so that the UE transmits uplink data or stops the uplink data transmission at the specified location of the unlicensed carrier according to an acquired avoidance rule if the UE detects after the reception of the uplink transmission grant and before performing the uplink data transmission that another system or device is using the unlicensed carrier at the specified location (S302), and
sending the avoidance rule for performing uplink transmission on the unlicensed carrier to the UE,
wherein the avoidance rule comprises at least one of a type of a transmission system that preferentially uses the unlicensed carrier, an identifier of a transmission device that preferentially uses the unlicensed carrier, an identifier of a transmission user that preferentially uses the unlicensed carrier, or an avoidance threshold for using the unlicensed carrier by the UE.

7. The method according to claim 6, wherein the acquiring capability information of user equipment UE specifically comprises:
receiving a report message sent by the UE, wherein the report message comprises the capability information of the UE (S401); or
sending a query message that carries an identifier of the UE to a core network device, and receiving a query response message returned by the core network device, wherein the query response message comprises the capability information of the UE.

8. The method according to claim 6, wherein the capability information of the UE comprises:
at least one of a frequency band supported by the UE, bandwidth supported by the UE, or whether the UE supports dynamic frequency selection.

9. The method according to claim 8, further comprising: sending indication information to the UE, wherein the indication information is information that the unlicensed carrier is occupied by another system or device, so that the UE determines, according to the indication information, whether another system or device is using the unlicensed carrier at the specified location.

10. A data processing apparatus, comprising:
a transceiver module (51), configured to receive an uplink transmission grant sent by a base station, wherein the uplink transmission grant is used to schedule the UE to perform uplink data transmission at a specified location of an unlicensed carrier;
a detection module (52), configured to detect after the reception of the uplink transmission grant and before performing the uplink data transmission, whether another system or device is using the unlicensed carrier at the specified location; and
a processing module (62), configured to: if the detection module (52) detects that another system or device is using the unlicensed carrier at the specified location, transmit uplink data or stop the uplink data transmission at the specified location of the unlicensed carrier according to an acquired avoidance rule
wherein the avoidance rule comprises at least one of a type of a transmission system that preferentially uses the unlicensed carrier, an identifier of a transmission device that preferentially uses the unlicensed carrier, an identifier of a transmission user that preferentially uses the unlicensed carrier, or an avoidance threshold for using the unlicensed carrier by the UE, wherein the transceiver module (51) is further configured to receive the avoidance rule sent by the base station, wherein the avoidance rule is an avoidance rule for performing uplink transmission on the unlicensed carrier by the UE.

11. The apparatus according to claim 10, wherein the processing module (62) is specifically configured to: if the detection module (52) detects that another system or device is using the unlicensed carrier at the specified location, transmit the uplink data or stop the uplink data transmission at the specified location of the unlicensed carrier according to an avoidance rule stipulated in a communications protocol, wherein the avoidance rule is an avoidance rule for performing uplink transmission on the unlicensed carrier by the UE.

12. The apparatus according to claim 10 or 11, wherein before the transceiver module (51) receives the uplink transmission grant sent by the base station, the transceiver module (51) is further configured to send a report message to the base station, wherein the report message carries capability information of the user equipment UE, so that the base station allocates the unlicensed carrier to the UE and sends the uplink transmission grant to the UE when the base station determines, according to the capability information of the UE, that the UE has a capability of supporting the unlicensed carrier, to schedule the UE to perform the uplink data transmission at the specified location of the unlicensed carrier; wherein
the capability information of the UE comprises at least one of a frequency band supported by the UE, bandwidth supported by the UE, or whether the UE supports dynamic frequency selection.

13. The apparatus according to claim 10, wherein the processing module (62) comprises:
a comparison unit (531), configured to: when the acquired avoidance rule is the avoidance threshold for using the unlicensed carrier by the UE, compare the avoidance threshold with a strength of an interference signal of the unlicensed carrier; and
a processing unit (532), configured to: if the strength of the interference signal of the unlicensed carrier is less than the avoidance threshold, transmit the uplink data at the specified location of the unlicensed carrier; wherein:
the processing unit is further configured to: if the strength of the interference signal of the unlicensed carrier is greater than or equal to the avoidance threshold, and another avoidance rule except the avoidance threshold for using the unlicensed carrier by the UE is acquired, transmit the uplink data or stop the uplink data transmission at the specified location of the unlicensed carrier according to the another avoidance rule; or
the processing unit (532) is further configured to: if the strength of the interference signal of the unlicensed carrier is greater than or equal to the avoidance threshold, and another avoidance rule except the avoidance threshold for using the unlicensed carrier by the UE is not acquired, stop the uplink data transmission at the specified location of the unlicensed carrier.

14. The apparatus according to claim 10 or 13, wherein the comparison unit (531) is further configured to compare, according to the avoidance rule or the another avoidance rule, a priority of a parameter corresponding to the UE with a priority of a parameter corresponding to another system or device that is using the unlicensed carrier; and
the processing unit (532) is further configured to: if it is determined, by means of comparison according to the avoidance rule or the another avoidance rule, that the priority of the parameter corresponding to the UE is higher than the priority of the parameter corresponding to the another system or device that is using the unlicensed carrier, transmit the uplink data at the specified location of the unlicensed carrier; or
the processing unit (532) is further configured to: if it is determined, by means of comparison according to the avoidance rule or the another avoidance rule, that the priority of the parameter corresponding to the UE is lower than the priority of the parameter corresponding to the another system or device that is using the unlicensed carrier, stop the uplink data transmission at the specified location of the unlicensed carrier; wherein
the parameter is a transmission system type, a transmission device identifier, or a transmission user identifier.

15. The apparatus according to claim 14, wherein the detection module (52) is specifically configured to detect whether a signal of another system or device on the unlicensed carrier exceeds a preset threshold; or
the detection module (52) is specifically configured to detect whether the base station sends indication information, wherein the indication information is information that the unlicensed carrier is occupied by another system or device.

16. A data processing apparatus, comprising:
an acquiring module (61), configured to acquire capability information of user equipment UE;
a processing module (62), configured to: determine, according to the capability information of the UE, whether the UE supports an unlicensed carrier; and if it is determined that the UE supports the unlicensed carrier, allocate the unlicensed carrier to the UE; and
a transceiver module (51), configured to: if the processing module (62) determines that the UE supports the unlicensed carrier, send an uplink transmission grant to the UE, wherein the uplink transmission grant is used to schedule the UE to perform uplink data transmission at a specified location of the unlicensed carrier, so that the UE transmits uplink data or stops the uplink data transmission at the specified location of the unlicensed carrier according to an acquired avoidance rule if the UE detects after the reception of the uplink transmission grant and before performing the uplink data transmission that another system or device is using the unlicensed carrier at the specified location,
wherein the transceiver module (51) is further configured to send an avoidance rule for performing uplink transmission on the unlicensed carrier to the UE,
wherein the avoidance rule comprises at least one of a type of a transmission system that preferentially uses the unlicensed carrier, an identifier of a transmission device that preferentially uses the unlicensed carrier, an identifier of a transmission user that preferentially uses the unlicensed carrier, or an avoidance threshold for using the unlicensed carrier by the UE.

17. The apparatus according to claim 16, wherein the acquiring module (61) is specifically configured to receive a report message sent by the user equipment, wherein the report message comprises the capability information of the UE; or
send a query message that carries an identifier of the UE to a core network device, and receive a query response message returned by the core network device, wherein the query response message comprises the capability information of the UE.

18. The apparatus according to claim 16, wherein the transceiver module (51) is further configured to send indication information to the UE, wherein the indication information is information that the unlicensed carrier is occupied by another system or device, so that the UE determines, according to the indication message, whether another system or device is using the unlicensed carrier at the specified location.

## Patentansprüche

1. Datenverarbeitungsverfahren in einem Benutzergerät (UE, User Equipment), das Folgendes umfasst:
Empfangen, durch das Benutzergerät UE, einer Uplink-Übertragungsberechtigung, gesendet von einer Basisstation, wobei die Uplink-Übertragungsberechtigung verwendet wird, um für das UE einzuplanen, eine Uplink-Datenübertragung bei einer angegebenen Position eines nicht lizenzierten Trägers durchzuführen (S101);
Detektieren, durch das UE, nach dem Empfang der Uplink-Übertragungsberechtigung und vor Durchführen der Uplink-Datenübertragung, ob ein anderes System oder eine andere Vorrichtung den nicht lizenzierten Träger an der angegebenen Position verwendet (S102);
wenn das UE detektiert, dass ein anderes System oder eine andere Vorrichtung den nicht lizenzierten Träger an der angegebenen Position verwendet, Übertragen von Uplink-Daten oder Unterbrechen der Uplink-Datenübertragung an der angegebenen Position gemäß einer erfassten Vermeidungsregel (S103), und
wobei die Vermeidungsregel zumindest einen Typ von Übertragungssystem, das vorzugsweise den nicht lizenzierten Träger verwendet, eine Kennung einer Übertragungsvorrichtung, die vorzugsweise den nicht lizenzierten Träger verwendet, eine Kennung eines Übertragungsbenutzers, der vorzugsweise den nicht lizenzierten Träger verwendet, und/oder eine Vermeidungsschwelle für das Verwenden des nicht lizenzierten Trägers durch das UE umfasst,
wobei eine Weise des Erfassens der Vermeidungsregel folgende ist:
Empfangen der von der Basisstation gesendeten Vermeidungsregel (S202), wobei die Vermeidungsregel eine Vermeidungsregel zum Durchführen von Uplink-Übertragung auf dem nicht lizenzierten Träger durch das UE ist; oder
Vereinbaren der Vermeidungsregel gemäß einem Kommunikationsprotokoll, wobei die Vermeidungsregel eine Vermeidungsregel zum Durchführen von Uplink-Übertragung auf dem nicht lizenzierten Träger durch das UE ist.

2. Verfahren nach Anspruch 1, wobei vor dem Empfangen, durch das Benutzergerät UE, einer von einer Basisstation gesendeten Uplink-Übertragungsberechtigung (S203), das Verfahren Folgendes umfasst:
Senden einer Meldenachricht an die Basisstation, wobei die Meldenachricht Fähigkeitsinformationen des UE transportiert, sodass die Basisstation den nicht lizenzierten Träger zu dem UE zuordnet und die Uplink-Übertragungsberechtigung an das UE sendet, wenn die Basisstation, gemäß den Fähigkeitsinformationen des UE, bestimmt, dass das UE eine Fähigkeit zum Unterstützen des nicht lizenzierten Trägers hat, um für das UE einzuplanen, die Uplink-Datenübertragung an der angegebenen Position des nicht lizenzierten Trägers durchzuführen (S201); wobei die Fähigkeitsinformationen des UE zumindest eines von Folgenden umfassen: ein durch das UE unterstütztes Frequenzband, eine durch das UE unterstützte Bandbreite und/oder, ob das UE dynamische Frequenzauswahl unterstützt (S201).

3. Verfahren nach Anspruch 2, wobei das Übertragen von Uplink-Daten oder Unterbrechen der Uplink-Datenübertragung an der angegebenen Position des nicht lizenzierten Trägers gemäß einer erfassten Vermeidungsregel speziell Folgendes umfasst:
wenn die erfasste Vermeidungsregel die Vermeidungsschwelle für das Verwenden des nicht lizenzierten Trägers durch das UE ist, Vergleichen der Vermeidungsschwelle mit einer Stärke eines Störsignals des nicht lizenzierten Trägers; und
wenn die Stärke des Störsignals des nicht lizenzierten Trägers kleiner als die Vermeidungsschwelle ist, Übertragen der Uplink-Daten bei der angegebenen Position des nicht lizenzierten Trägers; oder
wenn die Stärke des Störsignals des nicht lizenzierten Trägers größer als die oder gleich der Vermeidungsschwelle ist und eine andere Vermeidungsregel, ausgenommen die Vermeidungsschwelle für das Verwenden des nicht lizenzierten Trägers durch das UE, erfasst wird, Übertragen der Uplink-Daten oder Unterbrechen der Uplink-Datenübertragung bei der angegebenen Position des nicht lizenzierten Trägers gemäß der anderen Vermeidungsregel; oder
wenn die Stärke des Störsignals des nicht lizenzierten Trägers größer als die oder gleich der Vermeidungsschwelle ist und eine andere Vermeidungsregel, ausgenommen die Vermeidungsschwelle für das Verwenden des nicht lizenzierten Trägers durch das UE, nicht erfasst wird, Unterbrechen der Uplink-Datenübertragung bei der angegebenen Position des nicht lizenzierten Trägers.

4. Verfahren nach Anspruch 1 oder 3, wobei das Übertragen von Uplink-Daten oder Unterbrechen der Uplink-Datenübertragung an der angegebenen Position des nicht lizenzierten Trägers gemäß einer erfassten Vermeidungsregel oder der anderen Vermeidungsregel speziell Folgendes umfasst:
Vergleichen, gemäß der Vermeidungsregel oder der anderen Vermeidungsregel, einer Priorität eines Parameters entsprechend dem UE mit einer Priorität eines Parameters entsprechend einem anderen System oder einer anderen Vorrichtung, das bzw. die den nicht lizenzierten Träger verwendet; und
wenn bestimmt wird, mittels Vergleichs gemäß der Vermeidungsregel oder der anderen Vermeidungsregel, dass die Priorität des Parameters entsprechend dem UE höher als die Priorität des Parameters entsprechend dem anderen System oder der anderen Vorrichtung ist, das bzw. die den nicht lizenzierten Träger verwendet (S205), Übertragen der Uplink-Daten bei der angegebenen Position des nicht lizenzierten Trägers (S207); oder
wenn bestimmt wird, mittels Vergleichs gemäß der Vermeidungsregel oder der anderen Vermeidungsregel, dass die Priorität des Parameters entsprechend dem UE niedriger als die Priorität des Parameters entsprechend dem anderen System oder der anderen Vorrichtung ist, das bzw. die den nicht lizenzierten Träger verwendet (S205), Unterbrechen der Uplink-Datenübertragung bei der angegebenen Position des nicht lizenzierten Trägers (S207); wobei
der Parameter ein Übertragungssystemtyp, eine Übertragungsvorrichtungskennung oder eine Übertragungsbenutzerkennung ist.

5. Verfahren nach Anspruch 4, wobei das Detektieren, durch das UE, ob ein anderes System oder Benutzergerät den nicht lizenzierten Träger bei der angegebenen Position verwendet (S204), Folgendes umfasst:
Detektieren, durch das UE, ob ein Signal eines anderen Systems oder Benutzergeräts auf dem nicht lizenzierten Träger eine voreingestellte Schwelle überschreitet; oder
Detektieren, durch das UE, ob die Basisstation Anzeigeinformationen sendet, wobei die Anzeigeinformationen Informationen sind, dass der nicht lizenzierte Träger von einem anderen System oder einer anderen Vorrichtung belegt ist.

6. Datenverarbeitungsverfahren in einer Basisstation, das Folgendes umfasst: Erfassen von Fähigkeitsinformationen eines Benutzergeräts UE (S301); und
Bestimmen, gemäß den Fähigkeitsinformationen des UE, ob das UE eine Fähigkeit aufweist, einen nicht lizenzierten Träger zu unterstützen; und wenn das UE die Fähigkeit aufweist, den nicht lizenzierten Träger zu unterstützen, Zuordnen des nicht lizenzierten Trägers zum UE und Senden einer Uplink-Übertragungsberechtigung an das UE, wobei die Uplink-Übertragungsberechtigung verwendet wird, um für das UE einzuplanen, eine Uplink-Datenübertragung bei einer angegebenen Position des nicht lizenzierten Trägers durchzuführen, sodass das UE Uplink-Daten überträgt oder die Uplink-Datenübertragung bei der angegebenen Position des nicht lizenzierten Trägers gemäß einer erfassten Vermeidungsregel unterbricht, wenn das UE nach Empfang der Uplink-Übertragungsberechtigung und vor Durchführen der Uplink-Datenübertragung detektiert, dass ein anderes System oder eine andere Vorrichtung den nicht lizenzierten Träger bei der angegebenen Position verwendet (S302), und Senden der Vermeidungsregel für das Durchführen von Uplink-Übertragung auf dem nicht lizenzierten Träger an das UE,
wobei die Vermeidungsregel zumindest einen Typ von Übertragungssystem, das vorzugsweise den nicht lizenzierten Träger verwendet, eine Kennung einer Übertragungsvorrichtung, die vorzugsweise den nicht lizenzierten Träger verwendet, eine Kennung eines Übertragungsbenutzers, der vorzugsweise den nicht lizenzierten Träger verwendet, und/oder eine Vermeidungsschwelle für das Verwenden des nicht lizenzierten Trägers durch das UE umfasst.

7. Verfahren nach Anspruch 6, wobei das Erfassen von Fähigkeitsinformationen des Benutzergeräts UE speziell Folgendes umfasst:
Empfangen einer durch das UE gesendeten Meldenachricht, wobei die Meldenachricht die Fähigkeitsinformationen des UE umfasst (S401); oder
Senden einer Abfragenachricht, die eine Kennung des UE trägt, an eine Kernnetzwerkvorrichtung und Empfangen einer Abfrageantwortnachricht, die von der Kernnetzwerkvorrichtung zurückgegeben wird, wobei die Abfrageantwortnachricht die Fähigkeitsinformationen des UE umfasst.

8. Verfahren nach Anspruch 6, wobei die Fähigkeitsinformationen des UE Folgendes umfassen:
zumindest ein durch das UE unterstütztes Frequenzband, eine durch das UE unterstützte Bandbreite und/oder, ob das UE dynamische Frequenzauswahl unterstützt.

9. Verfahren nach Anspruch 8, das ferner Folgendes umfasst:
Senden von Anzeigeinformationen an das UE, wobei die Anzeigeinformationen Informationen sind, dass der nicht lizenzierte Träger von einem anderen System oder einer anderen Vorrichtung belegt ist, sodass das UE bestimmt, gemäß der Anzeigeinformationen, ob ein anderes System oder eine andere Vorrichtung den nicht lizenzierten Träger bei der angegebenen Position verwendet.

10. Vorrichtung zur Datenverarbeitung, die Folgendes umfasst:
ein Sender-Empfänger-Modul (51), dazu ausgelegt, eine Uplink-Übertragungsberechtigung, gesendet von einer Basisstation, zu empfangen, wobei die Uplink-Übertragungsberechtigung verwendet wird, um für das UE einzuplanen, eine Uplink-Datenübertragung bei einer angegebenen Position eines nicht lizenzierten Trägers durchzuführen;
ein Detektionsmodul (52), dazu ausgelegt, nach dem Empfang der Uplink-Übertragungsberechtigung und vor Durchführen der Uplink-Datenübertragung zu detektieren, ob ein anderes System oder eine andere Vorrichtung den nicht lizenzierten Träger an der angegebenen Position verwendet; und
ein Verarbeitungsmodul (62), ausgelegt zum: wenn das Detektionsmodul (52) detektiert, dass ein anderes System oder eine andere Vorrichtung den nicht lizenzierten Träger an der angegebenen Position verwendet, Übertragen von Uplink-Daten oder Unterbrechen der Uplink-Datenübertragung an der angegebenen Position gemäß einer erfassten Vermeidungsregel,
wobei die Vermeidungsregel zumindest einen Typ von Übertragungssystem, das vorzugsweise den nicht lizenzierten Träger verwendet, eine Kennung einer Übertragungsvorrichtung, die vorzugsweise den nicht lizenzierten Träger verwendet, eine Kennung eines Übertragungsbenutzers, der vorzugsweise den nicht lizenzierten Träger verwendet, und/oder eine Vermeidungsschwelle für das Verwenden des nicht lizenzierten Trägers durch das UE umfasst,
wobei das Sender-Empfänger-Modul (51) ferner dazu ausgelegt ist, die von der Basisstation gesendete Vermeidungsregel zu empfangen, wobei die Vermeidungsregel eine Vermeidungsregel zum Durchführen von Uplink-Übertragung auf dem nicht lizenzierten Träger durch das UE ist.

11. Einrichtung nach Anspruch 10, wobei das Verarbeitungsmodul (62) speziell ausgelegt ist zum:
wenn das Detektionsmodul (52) detektiert, dass ein anderes System oder eine andere Vorrichtung den nicht lizenzierten Träger bei der angegebenen Position verwendet, Übertragen der Uplink-Daten oder Unterbrechen der Datenübertragung bei der angegebenen Position des nicht lizenzierten Trägers gemäß einer in einem Kommunikationsprotokoll vereinbarten Vermeidungsregel, wobei die Vermeidungsregel eine Vermeidungsregel zum Durchführen von Uplink-Übertragung auf dem nicht lizenzierten Träger durch das UE ist.

12. Einrichtung nach Anspruch 10 oder 11, wobei, bevor das Sender-Empfänger-Modul (51) die von der Basisstation gesendete Uplink-Übertragungsberechtigung empfängt, das Sender-Empfänger-Modul (51) ferner dazu ausgelegt ist, eine Meldenachricht an die Basisstation zu senden, wobei die Meldenachricht Fähigkeitsinformationen des Benutzergeräts UE transportiert, sodass die Basisstation den nicht lizenzierten Träger zu dem UE zuordnet und die Uplink-Übertragungsberechtigung an das UE sendet, wenn die Basisstation, gemäß den Fähigkeitsinformationen des UE, bestimmt, dass das UE eine Fähigkeit zum Unterstützen des nicht lizenzierten Trägers hat, um für das UE einzuplanen, die Uplink-Datenübertragung an der angegebenen Position des nicht lizenzierten Trägers durchzuführen; wobei
die Fähigkeitsinformationen des UE zumindest eines von Folgenden umfassen: ein durch das UE unterstütztes Frequenzband, eine durch das UE unterstützte Bandbreite und/oder, ob das UE dynamische Frequenzauswahl unterstützt.

13. Einrichtung nach Anspruch 10, wobei das Verarbeitungsmodul (62) Folgendes umfasst:
eine Vergleichseinheit (531), ausgelegt zum: wenn die erfasste Vermeidungsregel die Vermeidungsschwelle für das Verwenden des nicht lizenzierten Trägers durch das UE ist, Vergleichen der Vermeidungsschwelle mit einer Stärke eines Störsignals des nicht lizenzierten Trägers; und
eine Verarbeitungseinheit (532), ausgelegt zum: wenn die Stärke des Störsignals des nicht lizenzierten Trägers kleiner als die Vermeidungsschwelle ist, Übertragen der Uplink-Daten bei der angegebenen Position des nicht lizenzierten Trägers; wobei:
die Verarbeitungseinheit ferner ausgelegt ist zum: wenn die Stärke des Störsignals des nicht lizenzierten Trägers größer als die oder gleich der Vermeidungsschwelle ist und eine andere Vermeidungsregel, ausgenommen die Vermeidungsschwelle für das Verwenden des nicht lizenzierten Trägers durch das UE, erfasst wird, Übertragen der Uplink-Daten oder Unterbrechen der Uplink-Datenübertragung bei der angegebenen Position des nicht lizenzierten Trägers gemäß der anderen Vermeidungsregel; oder
die Verarbeitungseinheit (532) ferner ausgelegt ist zum: wenn die Stärke des Störsignals des nicht lizenzierten Trägers größer als die oder gleich der Vermeidungsschwelle ist und eine andere Vermeidungsregel, ausgenommen die Vermeidungsschwelle für das Verwenden des nicht lizenzierten Trägers durch das UE, nicht erfasst wird, Unterbrechen der Uplink-Datenübertragung bei der angegebenen Position des nicht lizenzierten Trägers.

14. Einrichtung nach Anspruch 10 oder 13, wobei die Vergleichseinheit (531) ferner ausgelegt ist zum Vergleichen, gemäß der Vermeidungsregel oder der anderen Vermeidungsregel, einer Priorität eines Parameters entsprechend dem UE mit einer Priorität eines Parameters entsprechend einem anderen System oder einer anderen Vorrichtung, das bzw. die den nicht lizenzierten Träger verwendet; und
die Verarbeitungseinheit (532) ferner ausgelegt ist zum: wenn bestimmt wird, mittels Vergleichs gemäß der Vermeidungsregel oder der anderen Vermeidungsregel, dass die Priorität des Parameters entsprechend dem UE höher als die Priorität des Parameters entsprechend dem anderen System oder der anderen Vorrichtung ist, das bzw. die den nicht lizenzierten Träger verwendet, Übertragen der Uplink-Daten bei der angegebenen Position des nicht lizenzierten Trägers; oder
die Verarbeitungseinheit (532) ferner ausgelegt ist zum: wenn bestimmt wird, mittels Vergleichs gemäß der Vermeidungsregel oder der anderen Vermeidungsregel, dass die Priorität des Parameters entsprechend dem UE niedriger als die Priorität des Parameters entsprechend dem anderen System oder der anderen Vorrichtung ist, das bzw. die den nicht lizenzierten Träger verwendet, Unterbrechen der Uplink-Datenübertragung bei der angegebenen Position des nicht lizenzierten Trägers; wobei der Parameter ein Übertragungssystemtyp, eine Übertragungsvorrichtungskennung oder eine Übertragungsbenutzerkennung ist.

15. Einrichtung nach Anspruch 14, wobei das Detektionsmodul (52) speziell ausgelegt ist zum Detektieren, ob ein Signal eines anderen Systems oder einer anderen Vorrichtung auf dem nicht lizenzierten Träger eine voreingestellte Schwelle überschreitet; oder das Detektionsmodul (52) speziell ausgelegt ist zum Detektieren, ob die Basisstation Anzeigeinformationen sendet, wobei die Anzeigeinformationen Informationen sind, dass der nicht lizenzierte Träger von einem anderen System oder einer anderen Vorrichtung belegt ist.

16. Vorrichtung zur Datenverarbeitung, die Folgendes umfasst:
ein Erfassungsmodul (61), ausgelegt zum Erfassen von Fähigkeitsinformationen des Benutzergeräts UE;
ein Verarbeitungsmodul (62), ausgelegt zum: Bestimmen, gemäß den Fähigkeitsinformationen des UE, ob das UE einen nicht lizenzierten Träger unterstützt; und wenn bestimmt wird, dass das UE den nicht lizenzierten Träger unterstützt, Zuordnen des nicht lizenzierten Trägers zum UE; und
ein Sender-Empfänger-Modul (51), ausgelegt zum: wenn das Verarbeitungsmodul (62) bestimmt, dass das UE den nicht lizenzierten Träger unterstützt, Senden einer Uplink-Übertragungsberechtigung an das UE, wobei die Uplink-Übertragungsberechtigung verwendet wird, um für das UE einzuplanen, eine Uplink-Datenübertragung bei einer angegebenen Position des nicht lizenzierten Trägers durchzuführen, sodass das UE Uplink-Daten überträgt oder die Uplink-Datenübertragung bei der angegebenen Position des nicht lizenzierten Trägers gemäß einer erfassten Vermeidungsregel unterbricht, wenn das UE nach Empfang der Uplink-Übertragungsberechtigung und vor Durchführen der Uplink-Datenübertragung detektiert, dass ein anderes System oder eine andere Vorrichtung den nicht lizenzierten Träger bei der angegebenen Position verwendet,
wobei das Sender-Empfänger-Modul (51) ferner ausgelegt ist zum Senden einer Vermeidungsregel für das Durchführen von Uplink-Übertragung auf dem nicht lizenzierten Träger an das UE,
wobei die Vermeidungsregel zumindest einen Typ von Übertragungssystem, das vorzugsweise den nicht lizenzierten Träger verwendet, eine Kennung einer Übertragungsvorrichtung, die vorzugsweise den nicht lizenzierten Träger verwendet, eine Kennung eines Übertragungsbenutzers, der vorzugsweise den nicht lizenzierten Träger verwendet, und/oder eine Vermeidungsschwelle für das Verwenden des nicht lizenzierten Trägers durch das UE umfasst.

17. Einrichtung nach Anspruch 16, wobei das Erfassungsmodul (61) speziell ausgelegt ist zum Empfangen einer durch das Benutzergerät gesendeten Meldenachricht, wobei die Meldenachricht die Fähigkeitsinformationen des UE umfasst; oder
Senden einer Abfragenachricht, die eine Kennung des UE trägt, an eine Kernnetzwerkvorrichtung und Empfangen einer Abfrageantwortnachricht, die von der Kernnetzwerkvorrichtung zurückgegeben wird, wobei die Abfrageantwortnachricht die Fähigkeitsinformationen des UE umfasst.

18. Einrichtung nach Anspruch 16, wobei das Sender-Empfänger-Modul (51) ferner ausgelegt ist zum Senden von Anzeigeinformationen an das UE, wobei die Anzeigeinformationen Informationen sind, dass der nicht lizenzierte Träger von einem anderen System oder einer anderen Vorrichtung belegt ist, sodass das UE bestimmt, gemäß der Anzeigenachricht, ob ein anderes System oder eine andere Vorrichtung den nicht lizenzierten Träger bei der angegebenen Position verwendet.

## Revendications

1. Procédé de traitement de données dans un équipement d'utilisateur (UE), le procédé consistant à :
recevoir, par l'équipement d'utilisateur (UE), une autorisation de transmission en liaison montante envoyée par une station de base, l'autorisation de transmission en liaison montante étant utilisée pour planifier l'UE pour qu'il réalise une transmission de données en liaison montante à un emplacement spécifié d'une porteuse sans licence (S101) ;
détecter, par l'UE, après la réception de l'autorisation de transmission en liaison montante et avant la réalisation de la transmission de données en liaison montante, si un autre système ou dispositif utilise la porteuse sans licence à l'emplacement spécifié (S102) ;
si l'UE détecte qu'un autre système ou dispositif utilise la porteuse sans licence à l'emplacement spécifié, transmettre des données en liaison montante ou arrêter la transmission de données en liaison montante à l'emplacement spécifié de la porteuse sans licence selon une règle de prévention acquise (S103), et
la règle de prévention comprenant un type d'un système de transmission qui utilise de préférence la porteuse sans licence et/ou un identifiant d'un dispositif de transmission qui utilise de préférence la porteuse sans licence et/ou un identifiant d'un utilisateur de transmission qui utilise de préférence la porteuse sans licence, et/ou un seuil de prévention pour l'utilisation de la porteuse sans licence par l'UE, un mode d'acquisition de la règle de prévention consistant à :
recevoir la règle de prévention envoyée par la station de base (S202), la règle de prévention étant une règle de prévention pour la réalisation d'une transmission en liaison montante sur la porteuse sans licence par l'UE ; ou
stipuler la règle de prévention selon un protocole de communication, la règle de prévention étant une règle de prévention pour la réalisation d'une transmission en liaison montante sur la porteuse sans licence par l'UE.

2. Procédé selon la revendication 1, le procédé consistant en outre, avant la réception, par un équipement d'utilisateur (UE), d'une autorisation de transmission en liaison montante envoyée par une station de base (S203), à :
envoyer un message de rapport à la station de base, le message de rapport transportant une information de capacité de l'UE, de sorte que la station de base affecte la porteuse sans licence à l'UE et envoie l'autorisation de transmission en liaison montante à l'UE quand la station de base détermine, selon l'information de capacité de l'UE, que l'UE a la capacité de prendre en charge la porteuse sans licence, pour planifier l'UE pour qu'il réalise la transmission de données en liaison montante à l'emplacement spécifié de la porteuse sans licence (S201) ;
l'information de capacité de l'UE comprenant une bande de fréquences prise en charge par l'UE et/ou une bande passante prise en charge par l'UE, et/ou la prise en charge ou non par l'UE d'une sélection de fréquence dynamique (S201).

3. Procédé selon la revendication 2, dans lequel la transmission de données en liaison montante ou l'arrêt de la transmission de données en liaison montante à l'emplacement spécifié de la porteuse sans licence selon une règle de prévention acquise consiste spécifiquement à :
quand la règle de prévention acquise est le seuil de prévention pour l'utilisation de la porteuse sans licence par l'UE, comparer le seuil de prévention à une puissance d'un signal de brouillage de la porteuse sans licence ; et
si la puissance du signal de brouillage de la porteuse sans licence est inférieure au seuil de prévention, transmettre les données en liaison montante à l'emplacement spécifié de la porteuse sans licence ; ou
si la puissance du signal de brouillage de la porteuse sans licence est supérieure ou égale au seuil de prévention, et si une autre règle de prévention à l'exception du seuil de prévention pour l'utilisation de la porteuse sans licence par l'UE est acquise, transmettre les données en liaison montante ou arrêter la transmission de données en liaison montante à l'emplacement spécifié de la porteuse sans licence selon l'autre règle de prévention ; ou
si la puissance du signal de brouillage de la porteuse sans licence est supérieure ou égale au seuil de prévention, et si une autre règle de prévention à l'exception du seuil de prévention pour l'utilisation de la porteuse sans licence par l'UE n'est pas acquise, arrêter la transmission de données en liaison montante à l'emplacement spécifié de la porteuse sans licence.

4. Procédé selon la revendication 1 ou 3, dans lequel la transmission des données en liaison montante ou l'arrêt de la transmission de données en liaison montante à l'emplacement spécifié de la porteuse sans licence selon une règle de prévention acquise ou l'autre règle de prévention consiste spécifiquement à :
comparer, selon la règle de prévention ou l'autre règle de prévention, une priorité d'un paramètre correspondant à l'UE à une priorité d'un paramètre correspondant à un autre système ou dispositif qui utilise la porteuse sans licence ; et
s'il est déterminé, au moyen d'une comparaison selon la règle de prévention ou l'autre règle de prévention, que la priorité du paramètre correspondant à l'UE est supérieure à la priorité du paramètre correspondant à l'autre système ou dispositif qui utilise la porteuse sans licence (S205), transmettre les données en liaison montante à l'emplacement spécifié de la porteuse sans licence (S207) ; ou
s'il est déterminé, au moyen d'une comparaison selon la règle de prévention ou l'autre règle de prévention, que la priorité du paramètre correspondant à l'UE est inférieure à la priorité du paramètre correspondant à l'autre système ou dispositif qui utilise la porteuse sans licence (S205), arrêter la transmission de données en liaison montante à l'emplacement spécifié de la porteuse sans licence (S207) ;
le paramètre étant un type de système de transmission, un identifiant de dispositif de transmission ou un identifiant d'utilisateur de transmission.

5. Procédé selon la revendication 4, dans lequel la détection, par l'UE, de si un autre système ou équipement d'utilisateur utilise la porteuse sans licence à l'emplacement spécifié (S204), consiste à :
détecter, par l'UE, si un signal d'un autre système ou équipement d'utilisateur sur la porteuse sans licence dépasse un seuil prédéfini ; ou
détecter, par l'UE, si la station de base envoie une information d'indication, l'information d'indication étant une information indiquant que la porteuse sans licence est occupée par un autre système ou dispositif.

6. Procédé de traitement de données dans une station de base, le procédé consistant à :
acquérir une information de capacité d'un équipement d'utilisateur (UE) (S301) ; et
déterminer, selon l'information de capacité de l'UE, si l'UE a la capacité de prendre en charge une porteuse sans licence ; et si l'UE a la capacité de prendre en charge la porteuse sans licence, affecter la porteuse sans licence à l'UE et envoyer une autorisation de transmission en liaison montante à l'UE, l'autorisation de transmission en liaison montante étant utilisée pour planifier l'UE pour qu'il réalise une transmission de données en liaison montante à un emplacement spécifié de la porteuse sans licence, de sorte que l'UE transmette des données en liaison montante ou arrête la transmission de données en liaison montante à l'emplacement spécifié de la porteuse sans licence selon une règle de prévention acquise si l'UE détecte, après la réception de l'autorisation de transmission en liaison montante et avant la réalisation de la transmission de données en liaison montante, qu'un autre système ou dispositif utilise la porteuse sans licence à l'emplacement spécifié (S302) ; et
envoyer la règle de prévention à l'UE pour la réalisation d'une transmission en liaison montante sur la porteuse sans licence,
la règle de prévention comprenant un type d'un système de transmission qui utilise de préférence la porteuse sans licence et/ou un identifiant d'un dispositif de transmission qui utilise de préférence la porteuse sans licence et/ou un identifiant d'un utilisateur de transmission qui utilise de préférence la porteuse sans licence, et/ou un seuil de prévention pour l'utilisation de la porteuse sans licence par l'UE.

7. Procédé selon la revendication 6, dans lequel l'acquisition d'une information de capacité d'un équipement d'utilisateur (UE) consiste spécifiquement à :
recevoir un message de rapport envoyé par l'UE, le message de rapport comprenant l'information de capacité de l'UE (S401) ; ou
envoyer un message de requête qui transporte un identifiant de l'UE à un dispositif de réseau central, et recevoir un message de réponse de requête renvoyé par le dispositif de réseau central,
le message de réponse de requête comprenant l'information de capacité de l'UE.

8. Procédé selon la revendication 6, dans lequel l'information de capacité de l'UE comprend :
une bande de fréquences prise en charge par l'UE et/ou une bande passante prise en charge par l'UE, et/ou la prise en charge ou non par l'UE d'une sélection de fréquence dynamique.

9. Procédé selon la revendication 8, consistant en outre à :
envoyer une information d'indication à l'UE, l'information d'indication étant une information indiquant que la porteuse sans licence est occupée par un autre système ou dispositif, de sorte que l'UE détermine, selon l'information d'indication, si un autre système ou dispositif utilise la porteuse sans licence à l'emplacement spécifié.

10. Appareil de traitement de données, comprenant :
un module d'émission-réception (51), configuré pour recevoir une autorisation de transmission en liaison montante envoyée par une station de base, l'autorisation de transmission en liaison montante étant utilisée pour planifier l'UE pour qu'il réalise une transmission de données en liaison montante à un emplacement spécifié d'une porteuse sans licence ;
un module de détection (52), configuré pour détecter, après la réception de l'autorisation de transmission en liaison montante et avant la réalisation de la transmission de données en liaison montante, si un autre système ou dispositif utilise la porteuse sans licence à l'emplacement spécifié ; et
un module de traitement (62), configuré pour : si le module de détection (52) détecte qu'un autre système ou dispositif utilise la porteuse sans licence à l'emplacement spécifié, transmettre des données en liaison montante ou arrêter la transmission de données en liaison montante à l'emplacement spécifié de la porteuse sans licence selon une règle de prévention acquise,
la règle de prévention comprenant un type d'un système de transmission qui utilise de préférence la porteuse sans licence et/ou un identifiant d'un dispositif de transmission qui utilise de préférence la porteuse sans licence et/ou un identifiant d'un utilisateur de transmission qui utilise de préférence la porteuse sans licence, et/ou un seuil de prévention pour l'utilisation de la porteuse sans licence par l'UE,
le module d'émission-réception (51) étant en outre configuré pour recevoir la règle de prévention envoyée par la station de base, la règle de prévention étant une règle de prévention pour la réalisation d'une transmission en liaison montante sur la porteuse sans licence par l'UE.

11. Appareil selon la revendication 10, dans lequel le module de traitement (62) est spécifiquement configuré pour : si le module de détection (52) détecte qu'un autre système ou dispositif utilise la porteuse sans licence à l'emplacement spécifié, transmettre les données en liaison montante ou arrêter la transmission de données en liaison montante à l'emplacement spécifié de la porteuse sans licence selon une règle de prévention stipulée dans un protocole de communication, la règle de prévention étant une règle de prévention pour la réalisation d'une transmission en liaison montante sur la porteuse sans licence par l'UE.

12. Appareil selon la revendication 10 ou 11, dans lequel, avant que le module d'émission-réception (51) ne reçoive l'autorisation de transmission en liaison montante envoyée par la station de base, le module d'émission-réception (51) est en outre configuré pour envoyer un message de rapport à la station de base, le message de rapport transportant une information de capacité de l'équipement d'utilisateur (UE), de sorte que la station de base affecte la porteuse sans licence à l'UE et envoie l'autorisation de transmission en liaison montante à l'UE quand la station de base détermine, selon l'information de capacité de l'UE, que l'UE a la capacité de prendre en charge la porteuse sans licence, pour planifier l'UE pour qu'il réalise la transmission de données en liaison montante à l'emplacement spécifié de la porteuse sans licence,
l'information de capacité de l'UE comprenant une bande de fréquences prise en charge par l'UE et/ou une bande passante prise en charge par l'UE, et/ou la prise en charge ou non par l'UE d'une sélection de fréquence dynamique.

13. Appareil selon la revendication 10, dans lequel le module de traitement (62) comprend :
une unité de comparaison (531), configurée pour : quand la règle de prévention acquise est le seuil de prévention pour l'utilisation de la porteuse sans licence par l'UE, comparer le seuil de prévention à une puissance d'un signal de brouillage de la porteuse sans licence ; et
une unité de traitement (532), configurée pour : si la puissance du signal de brouillage de la porteuse sans licence est inférieure au seuil de prévention, transmettre les données en liaison montante à l'emplacement spécifié de la porteuse sans licence,
l'unité de traitement étant en outre configurée pour : si la puissance du signal de brouillage de la porteuse sans licence est supérieure ou égale au seuil de prévention, et si une autre règle de prévention à l'exception du seuil de prévention pour l'utilisation de la porteuse sans licence par l'UE est acquise, transmettre les données en liaison montante ou arrêter la transmission de données en liaison montante à l'emplacement spécifié de la porteuse sans licence selon l'autre règle de prévention ; ou
l'unité de traitement (532) étant en outre configurée pour : si la puissance du signal de brouillage de la porteuse sans licence est supérieure ou égale au seuil de prévention, et si une autre règle de prévention à l'exception du seuil de prévention pour l'utilisation de la porteuse sans licence par l'UE n'est pas acquise, arrêter la transmission de données en liaison montante à l'emplacement spécifié de la porteuse sans licence.

14. Appareil selon la revendication 10 ou 13, dans lequel l'unité de comparaison (531) est en outre configurée pour comparer, selon la règle de prévention ou l'autre règle de prévention, une priorité d'un paramètre correspondant à l'UE à une priorité d'un paramètre correspondant à un autre système ou dispositif qui utilise la porteuse sans licence ; et
l'unité de traitement (532) est en outre configurée pour : s'il est déterminé, au moyen d'une comparaison selon la règle de prévention ou l'autre règle de prévention, que la priorité du paramètre correspondant à l'UE est supérieure à la priorité du paramètre correspondant à l'autre système ou dispositif qui utilise la porteuse sans licence, transmettre les données en liaison montante à l'emplacement spécifié de la porteuse sans licence ; ou
l'unité de traitement (532) est en outre configurée pour : s'il est déterminé, au moyen d'une comparaison selon la règle de prévention ou l'autre règle de prévention, que la priorité du paramètre correspondant à l'UE est inférieure à la priorité du paramètre correspondant à l'autre système ou dispositif qui utilise la porteuse sans licence, arrêter la transmission de données en liaison montante à l'emplacement spécifié de la porteuse sans licence,
le paramètre étant un type de système de transmission, un identifiant de dispositif de transmission ou un identifiant d'utilisateur de transmission.

15. Appareil selon la revendication 14, dans lequel le module de détection (52) est spécifiquement configuré pour détecter si un signal d'un autre système ou dispositif sur la porteuse sans licence dépasse un seuil prédéfini ; ou
le module de détection (52) est spécifiquement configuré pour détecter si la station de base envoie une information d'indication, l'information d'indication étant une information indiquant que la porteuse sans licence est occupée par un autre système ou dispositif.

16. Appareil de traitement de données, comprenant :
un module d'acquisition (61), configuré pour acquérir une information de capacité d'un équipement d'utilisateur (UE) ;
un module de traitement (62), configuré pour : déterminer, selon l'information de capacité de l'UE, si l'UE prend en charge une porteuse sans licence ; et s'il est déterminé que l'UE prend en charge la porteuse sans licence, affecter la porteuse sans licence à l'UE ; et
un module d'émission-réception (51), configuré pour : si le module de traitement (62) détermine que l'UE prend en charge la porteuse sans licence, envoyer une autorisation de transmission en liaison montante à l'UE, l'autorisation de transmission en liaison montante étant utilisée pour planifier l'UE pour qu'il réalise une transmission de données en liaison montante à un emplacement spécifié de la porteuse sans licence, de sorte que l'UE transmette des données en liaison montante ou arrête la transmission de données en liaison montante à l'emplacement spécifié de la porteuse sans licence selon une règle de prévention acquise si l'UE détecte, après la réception de l'autorisation de transmission en liaison montante et avant la réalisation de la transmission de données en liaison montante, qu'un autre système ou dispositif utilise la porteuse sans licence à l'emplacement spécifié,
le module d'émission-réception (51) étant en outre configuré pour envoyer une règle de prévention à l'UE pour la réalisation d'une transmission en liaison montante sur la porteuse sans licence,
la règle de prévention comprenant un type d'un système de transmission qui utilise de préférence la porteuse sans licence et/ou un identifiant d'un dispositif de transmission qui utilise de préférence la porteuse sans licence et/ou un identifiant d'un utilisateur de transmission qui utilise de préférence la porteuse sans licence, et/ou un seuil de prévention pour l'utilisation de la porteuse sans licence par l'UE.

17. Appareil selon la revendication 16, dans lequel le module d'acquisition (61) est spécifiquement configuré pour recevoir un message de rapport envoyé par l'équipement d'utilisateur, le message de rapport comprenant l'information de capacité de l'UE ; ou
envoyer un message de requête qui transporte un identifiant de l'UE à un dispositif de réseau central, et recevoir un message de réponse de requête renvoyé par le dispositif de réseau central, le message de réponse de requête comprenant l'information de capacité de l'UE.

18. Appareil selon la revendication 16, dans lequel le module d'émission-réception (51) est en outre configuré pour envoyer une information d'indication à l'UE, l'information d'indication étant une information indiquant que la porteuse sans licence est occupée par un autre système ou dispositif, de sorte que l'UE détermine, selon le message d'indication, si un autre système ou dispositif utilise la porteuse sans licence à l'emplacement spécifié.
